(19) Europäisches Patentamt
European Patent Office
Office européen des brevets

(11) **EP 4 266 091 B1**

(12) **EUROPEAN PATENT SPECIFICATION**

(45) Date of publication and mention
of the grant of the patent:
**11.03.2026  Bulletin 2026/11**

(51) International Patent Classification (IPC):
**G02B 5/00** (2006.01)    **G02B 1/118** (2015.01)

(52) Cooperative Patent Classification (CPC):
**G02B 5/003; G02B 1/118; G02B 5/005**

(21) Application number: **23165165.4**

(22) Date of filing: **29.03.2023**

(54) **METAL LIGHT BLOCKING ELEMENT, IMAGING LENS ASSEMBLY MODULE AND ELECTRONIC DEVICE**

LICHTBLOCKIERENDES METALLELEMENT, BILDGEBUNGSLINSENANORDNUNGSMODUL UND ELEKTRONISCHE VORRICHTUNG

ÉLÉMENT DE BLOCAGE DE LUMIÈRE MÉTALLIQUE, MODULE D'ENSEMBLE LENTILLE D'IMAGERIE ET DISPOSITIF ÉLECTRONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.04.2022  US 202263329947 P**

(43) Date of publication of application:
**25.10.2023  Bulletin 2023/43**

(73) Proprietor: **Largan Precision Co. Ltd.
Taichung City 408 (TW)**

(72) Inventors:
• **TSAI, Wen-Yu
  408 Taichung City (TW)**
• **CHANG, Lin-An
  408 Taichung City (TW)**
• **CHOU, Ming-Ta
  408 Taichung City (TW)**

(74) Representative: **Jakelski & Althoff
Patentanwälte PartG mbB
Patentanwälte
Partnerschaftsgesellschaft
Mollenbachstraße 37
71229 Leonberg (DE)**

(56) References cited:
**US-A1- 2018 335 607     US-A1- 2020 088 969
US-A1- 2020 174 167     US-A1- 2021 165 136**

**Description**

**BACKGROUND**

Technical Field

The present disclosure relates to a metal light blocking element and an imaging lens assembly module. More particularly, the present disclosure relates to a metal light blocking element and an imaging lens assembly module applicable to portable electronic devices.

Description of Related Art

In recent years, portable electronic devices have developed rapidly. For example, intelligent electronic devices and tablets have been filled in the lives of modern people, and imaging lens assembly modules and metal light blocking elements mounted on portable electronic devices have also prospered, such as the disclosure in Publication Number US 2021/165136 A1, US 2020/174167 A1, US 2018/335607 A1 and US 2020/088969 A1. However, as technology advances, the quality requirements of the metal light blocking element are becoming higher and higher.

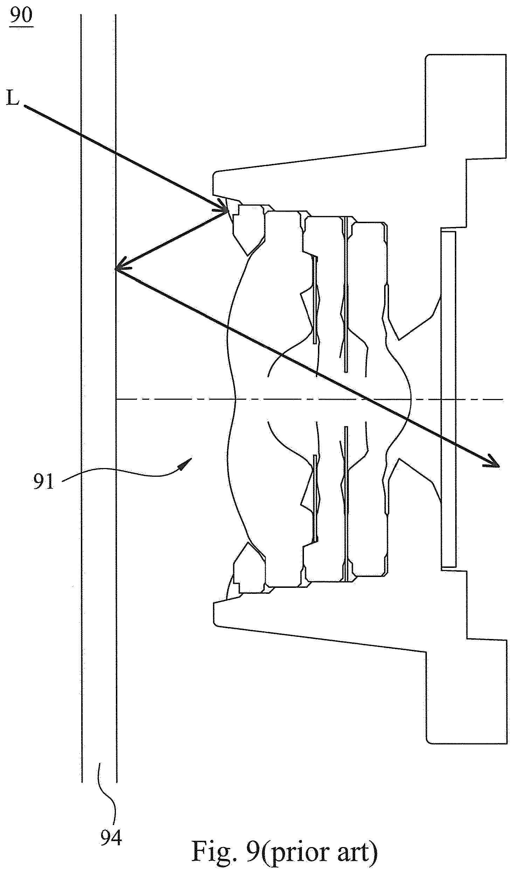

Fig. 9 is a schematic view of an imaging lens assembly module 90 according to the prior art. In Fig. 9, the non-imaging light L is usually caused in the imaging lens assembly module 90 of the prior art by the reflection of an assembling element (such as a protecting glass 94) on a periphery of an imaging lens set 91. Therefore, a metal light blocking element, which can provide the higher light blocking efficiency, needs to be developed.

**SUMMARY**

According to one aspect of the present disclosure, a metal light blocking element surrounds a central axis, and includes an outer diameter surface, a first annular surface, a second annular surface and an anti-reflecting layer. The outer diameter surface is defining an outer diameter of the metal light blocking element. The first annular surface is disposed opposite to the outer diameter surface, and the first annular surface is closer to the central axis than the outer diameter surface to the central axis. The second annular surface is disposed opposite to the outer diameter surface, the second annular surface is closer to the central axis than the outer diameter surface to the central axis, and the first annular surface is connected to the second annular surface to form a minimum opening structure. The anti-reflecting layer is disposed on the first annular surface and the second annular surface, covers the minimum opening structure, and includes a light absorbing layer and a nanostructure layer. The nanostructure layer is disposed on the light absorbing layer. The nanostructure layer includes a plurality of nanostructure units, and a nano-ridged convex structure layer is formed via the nanostructure units. The nano-ridged convex structure layer has a shape of wide bottom and narrow top. When the minimum opening structure is a tip end opening structure, and an angle is formed between the first annular surface and the second annular surface, the angle is $\alpha$, the following condition is satisfied: 0 degrees < $\alpha$ $\leq$ 170 degrees.

According to the metal light blocking element of the aforementioned aspect, wherein the light absorbing layer is made of a carbon black material.

According to the metal light blocking element of the aforementioned aspect, wherein the nanostructure layer includes a connecting layer, and the connecting layer is disposed between the light absorbing layer and the nano-ridged convex structure layer.

According to the metal light blocking element of the aforementioned aspect, wherein a thickness of the connecting layer is d, and the following condition is satisfied: 30 nm $\leq$ d $\leq$ 500 nm.

According to the metal light blocking element of the aforementioned aspect, wherein a height of each of the nanostructure units is h, and the following condition is satisfied: 90 nm $\leq$ h $\leq$ 350 nm.

According to the metal light blocking element of the aforementioned aspect, wherein the height of each of the nanostructure units is h, and the following condition is satisfied: 90 nm $\leq$ h $\leq$ 290 nm.

According to the metal light blocking element of the aforementioned aspect, wherein the tip end opening structure has at least one shrinkage cavity structure, and the shrinkage cavity structure is closer to the central axis than a maximum outer diameter of the tip end opening structure to the central axis.

According to the metal light blocking element of the aforementioned aspect, wherein the angle is $\alpha$, and the following condition is satisfied: 10 degrees $\leq$ $\alpha$ $\leq$ 150 degrees.

According to the metal light blocking element of the aforementioned aspect, wherein the angle is $\alpha$, and the following condition is satisfied: 20 degrees $\leq$ $\alpha$ $\leq$ 120 degrees.

According to the metal light blocking element of the aforementioned aspect, wherein the metal light blocking element further includes a recess structure disposed on at least one of the first annular surface and the second annular surface, the recess structure caves towards the outer diameter surface, and at least one portion of the anti-reflecting layer is disposed on the recess structure.

According to one aspect of the present disclosure, an imaging lens assembly module includes an imaging lens set and at least one of the metal light blocking element of the aforementioned aspect, wherein the metal light blocking element is disposed opposite to the imaging lens set.

According to one aspect of the present disclosure, an electronic device includes the imaging lens assembly module of the aforementioned aspect and an image sensor, wherein the image sensor is disposed on an image surface of the imaging lens assembly module.

According to one aspect of the present disclosure, a metal light blocking element surrounds a central axis, and includes an outer diameter surface, a first annular surface, a second annular surface and an anti-reflecting layer. The outer diameter surface is defining an outer diameter of the metal light blocking element. The first annular surface is disposed opposite to the outer diameter surface, and the first annular surface is closer to the central axis than the outer diameter surface to the central axis. The second annular surface is disposed opposite to the outer diameter surface, the second annular surface is closer to the central axis than the outer diameter surface to the central axis, and the first annular surface is connected to the second annular surface to form a minimum opening structure. The anti-reflecting layer is disposed on the first annular surface and the second annular surface, covers the minimum opening structure, and includes a light absorbing layer and a nanostructure layer. The nanostructure layer is disposed on the light absorbing layer. The nanostructure layer includes a plurality of nanostructure units, and a nano-ridged convex structure layer is formed via the nanostructure units. The nano-ridged convex structure layer has a shape of wide bottom and narrow top. When a length of the first annular surface along the central axis is L1, and a length of the second annular surface along the central axis is L2, the following condition is satisfied: $0.01 \text{ mm} \leq L1+L2 \leq 3.00 \text{ mm}$.

According to the metal light blocking element of the aforementioned aspect, wherein the light absorbing layer is made of a carbon black material.

According to the metal light blocking element of the aforementioned aspect, wherein the nanostructure layer includes a connecting layer, and the connecting layer is disposed between the light absorbing layer and the nano-ridged convex structure layer.

According to the metal light blocking element of the aforementioned aspect, wherein a thickness of the connecting layer is d, and the following condition is satisfied: $30 \text{ nm} \leq d \leq 500 \text{ nm}$.

According to the metal light blocking element of the aforementioned aspect, wherein a height of each of the nanostructure units is h, and the following condition is satisfied: $90 \text{ nm} \leq h \leq 350 \text{ nm}$.

According to the metal light blocking element of the aforementioned aspect, wherein the height of each of the nanostructure units is h, and the following condition is satisfied: $90 \text{ nm} \leq h \leq 290 \text{ nm}$.

According to the metal light blocking element of the aforementioned aspect, wherein the length of the first annular surface along the central axis is L1, the length of the second annular surface along the central axis is L2, and the following condition is satisfied: $0.03 \leq L1/L2 \leq 5$.

According to the metal light blocking element of the aforementioned aspect, wherein the metal light blocking element further includes a recess structure disposed on at least one of the first annular surface and the second annular surface, the recess structure caves towards the outer diameter surface, and at least one portion of the anti-reflecting layer is disposed on the recess structure.

According to the metal light blocking element of the aforementioned aspect, wherein the minimum opening structure has at least one shrinkage cavity structure, and the shrinkage cavity structure is closer to the central axis than a maximum outer diameter of the minimum opening structure to the central axis.

According to one aspect of the present disclosure, a metal light blocking element surrounds a central axis, and includes an outer diameter surface, a first annular surface, a second annular surface and an anti-reflecting layer. The outer diameter surface is defining an outer diameter of the metal light blocking element. The first annular surface is disposed opposite to the outer diameter surface, and the first annular surface is closer to the central axis than the outer diameter surface to the central axis. The second annular surface is disposed opposite to the outer diameter surface, the second annular surface is closer to the central axis than the outer diameter surface to the central axis, and the first annular surface is connected to the second annular surface. The anti-reflecting layer is disposed on at least one of the first annular surface and the second annular surface, and includes a light absorbing layer and a nanostructure layer. The nanostructure layer is disposed on the light absorbing layer. The nanostructure layer includes a plurality of nanostructure units, and a nano-ridged convex structure layer is formed via the nanostructure units. The nano-ridged convex structure layer has a shape of wide bottom and narrow top. A height of each of the nanostructure units is h, the following condition is satisfied: $90 \text{ nm} \leq h \leq 350 \text{ nm}$.

According to the metal light blocking element of the aforementioned aspect, wherein the height of each of the nanostructure units is h, and the following condition is satisfied: $90 \text{ nm} \leq h \leq 290 \text{ nm}$.

According to the metal light blocking element of the aforementioned aspect, wherein the light absorbing layer is made of a carbon black material.

## BRIEF DESCRIPTION OF THE DRAWINGS

Fig. 1A is a three dimensional view of an imaging lens assembly module according to the 1st example of the present disclosure.

Fig. 1B is a schematic view of an application situation of the imaging lens assembly module according to the 1st example in Fig. 1A.

Fig. 1C is a schematic view of the imaging lens assembly module according to the 1st example in Fig. 1A.

Fig. 1D is an exploded view of the imaging lens assembly module according to the 1st example in Fig. 1A.

Fig. 1E is a scanning electron microscope image of the anti-reflecting layer according to the 1st example in Fig. 1D.

Fig. 1F is a scanning electron microscope image of the nano-ridged convex structure layer according to the 1st example in Fig. 1D.

Fig. 1G is a schematic view of the metal light blocking element according to the 1st example in Fig. 1A.

Fig. 2A is a schematic view of an imaging lens assembly module according to the 2nd example of the present disclosure.

Fig. 2B is an enlarged view of the metal light blocking element according to the 2nd example in Fig. 2A.

Fig. 2C is a partial cross-section view of the metal light blocking element according to the 2nd example in Fig. 2A.

Fig. 2D is a schematic view of the metal light blocking element according to the 2nd example in Fig. 2A.

Fig. 2E is an enlarged view of the metal light blocking element according to the 2nd example in Fig. 2A.

Fig. 2F is an enlarged view of the metal light blocking element according to the 2nd example in Fig. 2A.

Fig. 3 is an enlarged view of a metal light blocking element according to the 3rd example of the present disclosure.

Fig. 4A is a schematic view of an imaging lens assembly module according to the 4th example of the present disclosure.

Fig. 4B is an enlarged view of a metal light blocking element according to the 4th example in Fig. 4A.

Fig. 5 is a schematic view of the imaging lens assembly module according to the 5th example of the present disclosure.

Fig. 6A is a schematic view of an electronic device according to the 6th example of the present disclosure.

Fig. 6B is another schematic view of the electronic device according to the 6th example in Fig. 6A.

Fig. 6C is a schematic view of an image captured via the electronic device according to the 6th example in Fig. 6A.

Fig. 6D is another schematic view of an image captured via the electronic device according to the 6th example in Fig. 6A.

Fig. 6E is still another schematic view of an image captured via the electronic device according to the 6th example in Fig. 6A.

Fig. 7 is a schematic view of an electronic device according to the 7th example of the present disclosure.

Fig. 8A is a schematic view of a vehicle instrument according to the 8th example of the present disclosure.

Fig. 8B is another schematic view of the vehicle instrument according to the 8th example in Fig. 8A.

Fig. 8C is still another schematic view of the vehicle instrument according to the 8th example in Fig. 8A.

Fig. 9 is a schematic view of an imaging lens assembly module according to the prior art.

## DETAILED DESCRIPTION

The present disclosure provides a metal light blocking element, which surrounds a central axis, and includes an outer diameter surface, a first annular surface, a second annular surface and an anti-reflecting layer. The outer diameter surface is defining an outer diameter of the metal light blocking element. The first annular surface is disposed opposite to the outer diameter surface, and the first annular surface is closer to the central axis than the outer diameter surface to the central axis. The second annular surface is disposed opposite to the outer diameter surface, the second annular surface is closer to the central axis than the outer diameter surface to the central axis, and the first annular surface is connected to the second annular surface. The anti-reflecting layer is disposed on at least one of the first annular surface and the second annular surface, and the anti-reflecting layer includes a light absorbing layer and a nanostructure layer, wherein the nanostructure layer is disposed on the light absorbing layer. In particular, the incident light incident on a surface of the metal light blocking element can be guided to the light absorbing layer which is underlying via the nanostructure layer, and the light is absorbed via the light absorbing layer, so that the surface of the metal light blocking element has the low-reflecting characteristic to provide the higher light blocking efficiency.

The metal light blocking element can be made of a free machine brass or a copper alloy, and the metal light blocking element can be used as an auxiliary light blocking element, a spacer, a lens barrel or a light blocking element, wherein the auxiliary light blocking element can be an additional element which is disposed outside the imaging lens assembly module so as to cooperate the structure of the imaging lens assembly module for blocking the portion of the imaging lens assembly module which the stray light is easily formed, but the present disclosure is not limited thereto.

The first annular surface is connected to the second annular surface to form a minimum opening structure, the anti-reflecting layer covers the minimum opening structure, and the minimum opening structure can be a tip end opening structure. In particular, the connection between the first annular surface and the second annular surface is the minimum opening structure, wherein the anti-reflecting layer covers the minimum opening structure, and the minimum opening structure surrounds the central axis to form a minimum opening. Therefore, the optical purpose can be provided. In particular, the light absorbing layer and the nanostructure layer can be coated on the minimum opening structure and a surface around the minimum opening of the metal light blocking element via the special process, so that the minimum opening structure has the low-reflecting characteristic.

When an angle is formed between the first annular surface and the second annular surface, and the angle is $\alpha$, the following condition is satisfied: 0 degrees $< \alpha \le 170$ degrees. Further, the following condition can be satisfied: 10 degrees $\le \alpha \le 150$ degrees. When $\alpha$ satisfied the aforementioned condition, the manufacturing of the metal processing can have the higher efficiency. Further, the following condition can be satisfied: 20 degrees $\le \alpha \le 120$ degrees. When $\alpha$ satisfied the aforementioned condition, it is suitable for applying to the optical aperture opening so as to provide the higher optical quality.

When a length of the first annular surface along the central axis is L1, and a length of the second annular surface along the central axis is L2, the following condition is satisfied: 0.01 mm $\le$ L1+L2 $\le$ 3.00 mm. When the first annular surface and the second annular surface have the specific length range along the central axis, the anti-reflecting function of the minimum opening structure can be ensured to achieve. Moreover, the lengths of the first annular surface and the second annular surface along the central axis can be zero because of the angle of the metal turning process, that is, L1 and L2 can be zero.

The nanostructure layer includes a plurality of nanostructure units, and a nano-ridged convex structure layer is formed via the nanostructure units, wherein a height of each of the nanostructure units is h, and the following condition can be satisfied: 90 nm $\le$ h $\le$ 350 nm. By disposing the nanostructure units with the height range of the optical matching, the light more easily enters the light absorbing layer. Therefore, the manufacturing method of coating the nanostructure units on the inner opening can be provided, and the feasibility of fast and easy mass production can be achieved. Further, when the nano-ridged convex structure layer is observed from the cross-section, the nano-ridged convex structure layer shows the shape of wide bottom and narrow top like a mountain ridge so as to gradually decrease the equivalent refractive index from the bottom to the top of the nanostructure layer for reducing the reflecting light. In particular, the nano-ridged convex structure layer can be made of an aluminum oxide material, but the present disclosure is not limited thereto. Further, the following condition can be satisfied: 90 nm $\le$ h $\le$ 290 nm. When h satisfied the aforementioned condition, the nano-ridged convex structure layer with the more stable structure can be obtained, so that the peeling or the broken is not easily formed on the nano-ridged convex structure layer.

The light absorbing layer can be made of a carbon black material. Therefore, the light absorption rate can be enhanced, and the uniformity of the light absorbing layer can be provided.

The nanostructure layer can include a connecting layer, wherein the connecting layer is disposed between the light absorbing layer and the nano-ridged convex structure layer. Moreover, there is no gap between a top of the connecting layer and a bottom of the nano-ridged convex structure layer, that is, the connecting layer is tightly connected to the nano-ridged convex structure layer. Therefore, the nanostructure layer has the stronger structural stability. In particular, the connecting layer can be made of a silicon dioxide material, but the present disclosure is not limited thereto.

The minimum opening structure can have at least one shrinkage cavity structure, and the shrinkage cavity structure is closer to the central axis than a maximum outer diameter of the minimum opening structure to the central axis. Furthermore, the tip end opening structure can have the shrinkage cavity structure, wherein the shrinkage cavity structure is closer to the central axis than a maximum outer diameter of the tip end opening structure to the central axis. By the light blocking design of the shrinkage cavity structure, the possibility of forming the stray light of the tip end opening structure can be reduced.

The metal light blocking element can further include a recess structure, wherein the recess structure is disposed on at least one of the first annular surface and the second annular surface, the recess structure caves towards the outer diameter surface, and at least one portion of the anti-reflecting layer is disposed on the recess structure. Therefore, the light trap structure can be formed to reduce the possibility of forming the stray light.

When a thickness of the connecting layer is d, the following condition can be satisfied: 30 nm ≤ d ≤ 500 nm. The coating yield rate of the nano-ridged convex structure layer can be enhanced by disposing the connecting layer with the specific thickness range, and the light absorbing layer can be protected from scratching.

When the length of the first annular surface along the central axis is L1, and the length of the second annular surface along the central axis is L2, the following condition can be satisfied: 0.03 ≤ L1/L2 ≤ 5. When L1/L2 satisfied the aforementioned condition, the proportional range of the minimum opening structure of the metal light blocking structure which is directly irradiated via the strong light source can be reduced, and the manufacturing feasibility can be kept.

Each of the aforementioned features of the metal light blocking structure can be utilized in various combinations for achieving the corresponding effects.

The present disclosure provides an imaging lens assembly module, which includes an imaging lens set and at least one of the aforementioned metal light blocking element. The metal light blocking element is disposed opposite to the imaging lens set. In detail, the metal light blocking element can be disposed on an object side or an image side of the imaging lens set, or the metal light blocking element can be disposed between any two of imaging lens elements of the imaging lens set.

The present disclosure provides an electronic device, which includes the aforementioned imaging lens assembly module and an image sensor. The image sensor is disposed on an image surface of the imaging lens assembly module.

According to the aforementioned embodiment, specific examples are provided, and illustrated via figures.

<1st example>

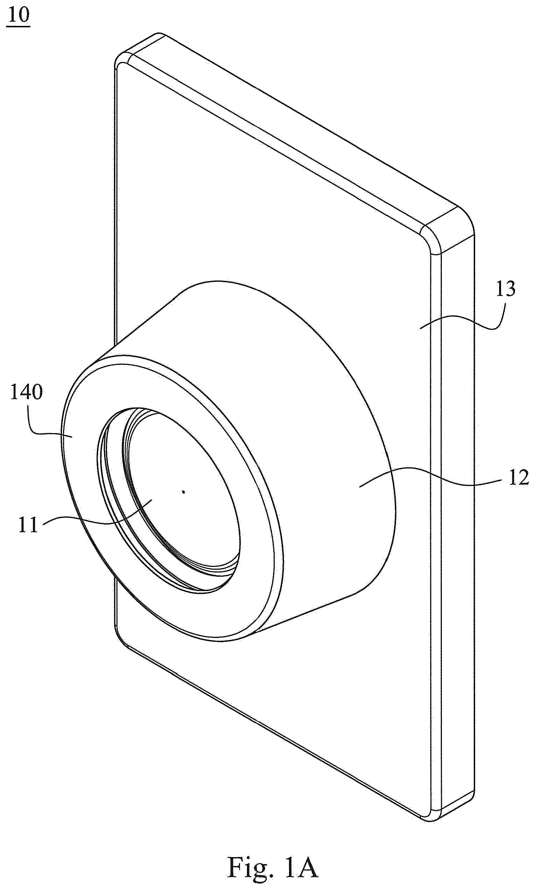

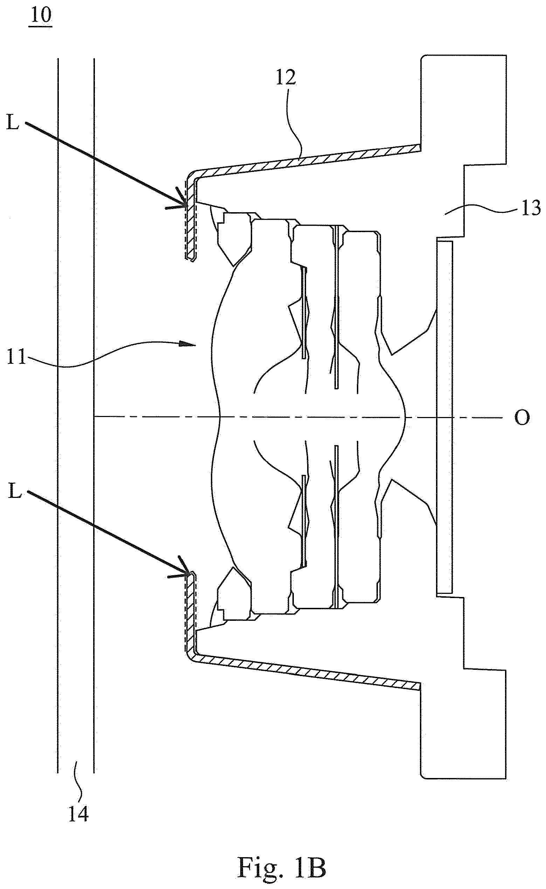

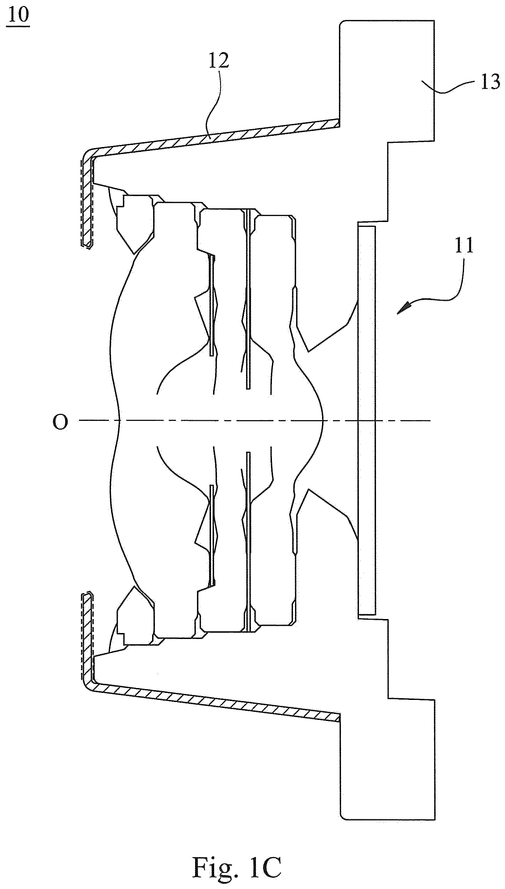

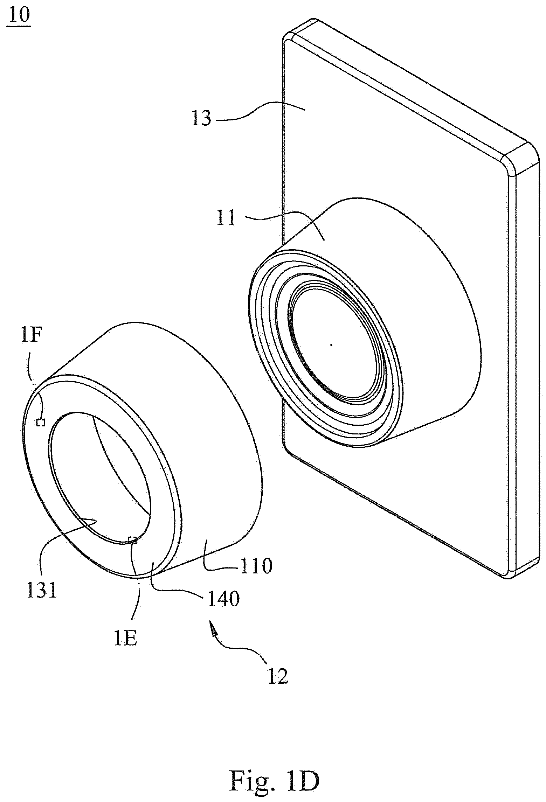

Fig. 1A is a three dimensional view of an imaging lens assembly module 10 according to the 1st example of the present disclosure. Fig. 1B is a schematic view of an application situation of the imaging lens assembly module 10 according to the 1st example in Fig. 1A. Fig. 1C is a schematic view of the imaging lens assembly module 10 according to the 1st example in Fig. 1A. Fig. 1D is an exploded view of the imaging lens assembly module 10 according to the 1st example in Fig. 1A. In Figs. 1A to 1D, the imaging lens assembly module 10 includes an imaging lens set 11, a metal light blocking element 12, a lens barrel 13 and a protecting glass 14, wherein the metal light blocking element 12 is disposed opposite to the imaging lens set 11, the metal light blocking element 12 is disposed on an object side of the imaging lens set 11, the lens barrel 13 is configured to accommodate the imaging lens set 11, and the protecting glass 14 is disposed on an object side of the metal light blocking element 12.

Further, the metal light blocking element 12 is disposed on an outer surface of the lens barrel 13 so as to easily assemble for quickly achieving the light blocking effect. In particular, the metal light blocking element 12 is an auxiliary light blocking element, wherein the auxiliary light blocking element can be an additional element which is disposed outside the imaging lens assembly module 10 so as to cooperate the structure of the imaging lens assembly module 10 for blocking the portion of the imaging lens assembly module 10 which the stray light is easily formed, but the present disclosure is not limited thereto.

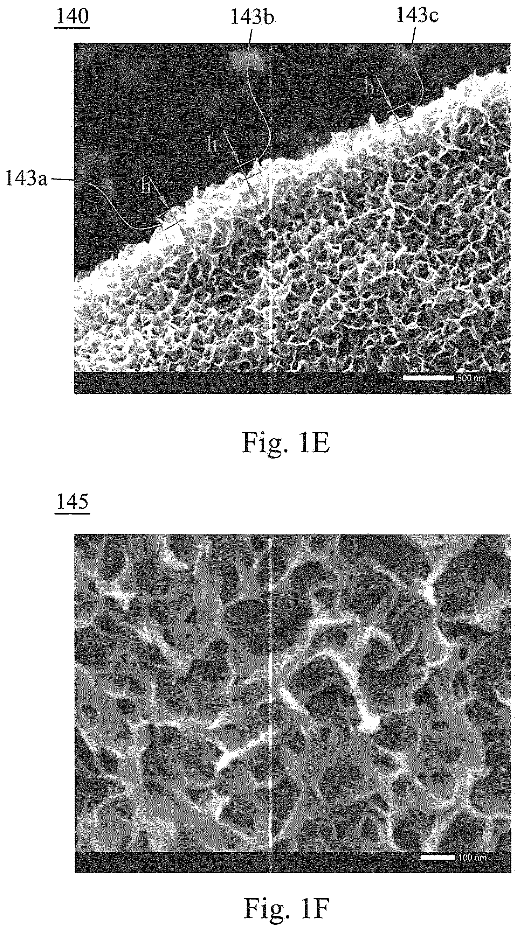

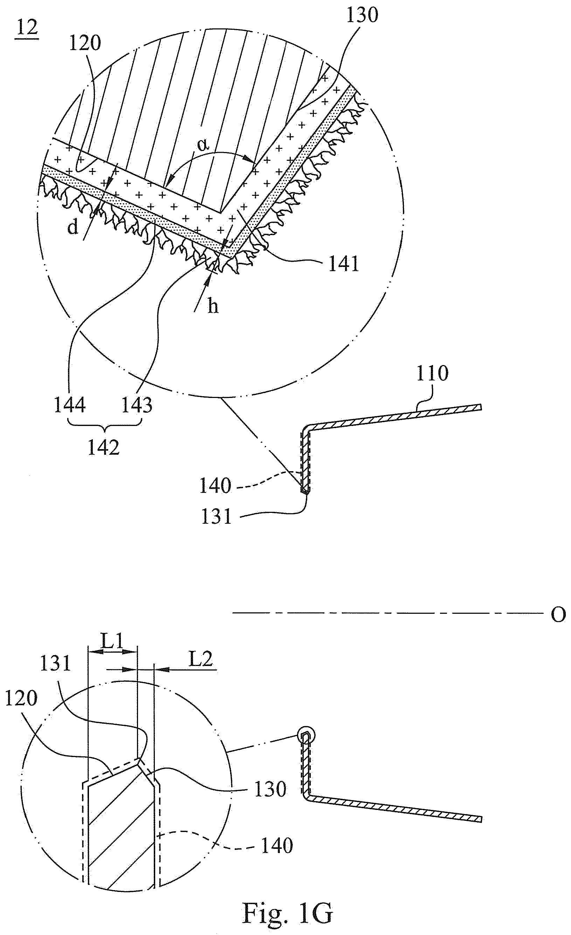

Fig. 1E is a scanning electron microscope image of the anti-reflecting layer 140 according to the 1st example in Fig. 1D. Fig. 1F is a scanning electron microscope image of the nano-ridged convex structure layer 145 according to the 1st example in Fig. 1D. Fig. 1G is a schematic view of the metal light blocking element 12 according to the 1st example in Fig. 1A. In Figs. 1B to 1G, the metal light blocking element 12 surrounds a central axis O, and includes an outer diameter surface 110, a first annular surface 120, a second annular surface 130 and an anti-reflecting layer 140. The outer diameter surface 110 is defining an outer diameter of the metal light blocking element 12. The first annular surface 120 is disposed opposite to the outer diameter surface 110, and the first annular surface 120 is closer to the central axis O than the outer diameter surface 110 to the central axis O. The second annular surface 130 is disposed opposite to the outer diameter surface 110, the second annular surface 130 is closer to the central axis O than the outer diameter surface 110 to the central axis O, and the first annular surface 120 is connected to the second annular surface 130 to form a minimum opening structure (its reference numeral is omitted), wherein the minimum opening structure is a tip end opening structure so as to provide the optical purpose. The anti-reflecting layer 140 is disposed on the first annular surface 120 and the second annular surface 130, the anti-reflecting layer 140 covers the minimum opening structure, and the anti-reflecting layer 140 includes a light absorbing layer 141 and a nanostructure layer 142, wherein the nanostructure layer 142 is disposed on the light absorbing layer 141. In particular, a connection between the first annular surface 120 and the second annular surface 130 is the minimum opening structure, wherein the anti-reflecting layer 140 covers the minimum opening structure, and the minimum opening structure surrounds the central axis O to form a minimum opening 131. It should be mentioned that Fig. 1G shows the enlarged views of two kinds of the magnifications to clearly indicate the structural details of the metal light blocking element 12, and the dotted line in Figs. 1B, 1C and 1G is configured to indicate the disposing range of the anti-reflecting layer 140.

In Fig. 1B, the metal light blocking element 12 is processed via the special process so as to prevent the periphery of the imaging lens set 11 from forming the non-imaging light L. In particular, the light absorbing layer 141 and the nanostructure layer 142 are coated on the minimum opening structure and the surface of the periphery of the minimum opening structure of the metal light blocking element 12 via the special process to prevent from forming the additional non-imaging light, wherein the incident light incident on a surface of the metal light blocking element 12 can be guided to the light absorbing layer 141 which is underlying via the nanostructure layer 142, and the light is absorbed via the light absorbing layer 141, so that both of the surface of the metal light blocking element 12 and the minimum opening structure have the low-reflecting characteristic to provide the higher light blocking efficiency. Moreover, the light absorbing layer 141 is made of a carbon black material to enhance the light absorption rate and provide the uniformity of the light absorbing layer 141, and the metal light blocking element 12 can be made of a free machine brass or a copper alloy, but the present disclosure is not limited thereto.

In Figs. 1E to 1G, the nanostructure layer 142 includes a plurality of nanostructure units 143, 143a, 143b, 143c and a connecting layer 144, wherein a nano-ridged convex structure layer 145 is formed via the nanostructure units 143, 143a, 143b, 143c, and the connecting layer 144 is disposed between the light absorbing layer 141 and the nano-ridged convex structure layer 145. Therefore, the manufacturing method of coating the nanostructure units 143, 143a, 143b, 143c on the inner opening can be provided, and the feasibility of fast and easy mass production can be achieved. Moreover, there is no gap between a top of the connecting layer 144 and a bottom of the nano-ridged convex structure layer 145, that is, the connecting layer 144 is tightly connected to the nano-ridged convex structure layer 145. Therefore, the nanostructure layer 142 has the stronger structural stability. In detail, the nano-ridged convex structure layer 145 can be made of an aluminum oxide material, and the connecting layer 144 can be made of a silicon dioxide material, but the present disclosure is not limited thereto.

In Fig. 1E, when the nano-ridged convex structure layer 145 is observed from the cross-section, the nano-ridged convex structure layer 145 shows the shape of wide bottom and narrow top like a mountain ridge so as to gradually decrease the equivalent refractive index from the bottom to the top of the nanostructure layer 142 for reducing the reflecting light. Furthermore, a height of each of the nanostructure units 143a, 143b, 143c is h, wherein the height h of the nanostructure unit 143a is 143.6 nm, the height h of the nanostructure unit 143b is 143.1 nm, and the height h of the nanostructure unit 143c is 131.5 nm.

In Fig. 1G, an angle is formed between the first annular surface 120 and the second annular surface 130, and the angle is $\alpha$; a thickness of the connecting layer 144 is d; a height of each of the nanostructure units 143 is h; a length of the first annular surface 120 along the central axis O is L1, and a length of the second annular surface 130 along the central axis O is L2, the following conditions of Table 1A are satisfied.

| Table 1A, the 1st example | | | |
|---|---|---|---|
| $\alpha$ (degree) | 103 | L2 (mm) | 0.015 |
| d (nm) | 100 | L1+L2 (mm) | 0.06 |
| h (nm) | 220 | L1/L2 | 3 |
| L1 (mm) | 0.045 | | |

<2nd example>

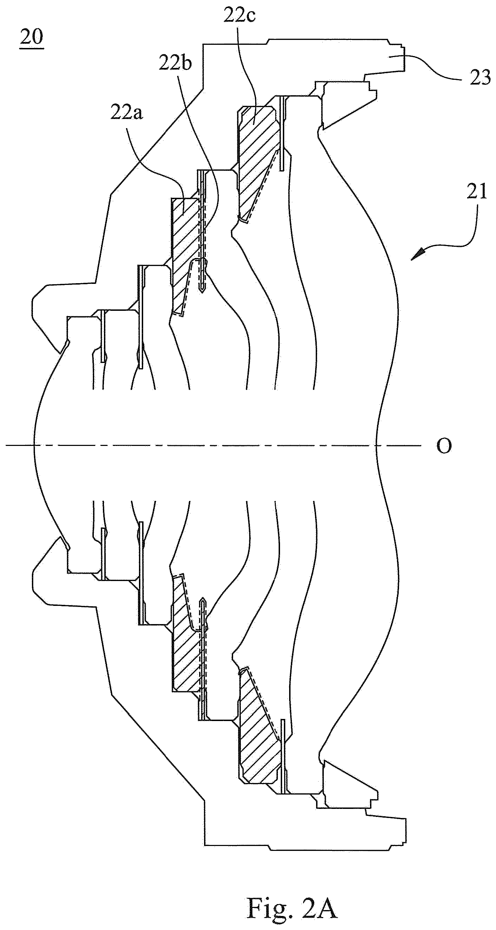

Fig. 2A is a schematic view of an imaging lens assembly module 20 according to the 2nd example of the present disclosure. In Fig. 2A, the imaging lens assembly module 20 includes an imaging lens set 21, a plurality of metal light blocking elements 22a, 22b, 22c and a lens barrel 23, wherein the metal light blocking elements 22a, 22b, 22c are disposed opposite to the imaging lens set 21, each of the metal light blocking elements 22a, 22b, 22c is disposed between any two of imaging lens elements (their reference numerals are omitted) of the imaging lens set 21, and the lens barrel 23 is configured to accommodate the imaging lens set 21. Further, the metal light blocking elements 22a, 22b, 22c are disposed in the lens barrel 23 so as to obtain the light blocking effect according to the requirements. In particular, the metal light blocking elements 22a, 22c are spacers, and the metal light blocking element 22b is a light blocking sheet.

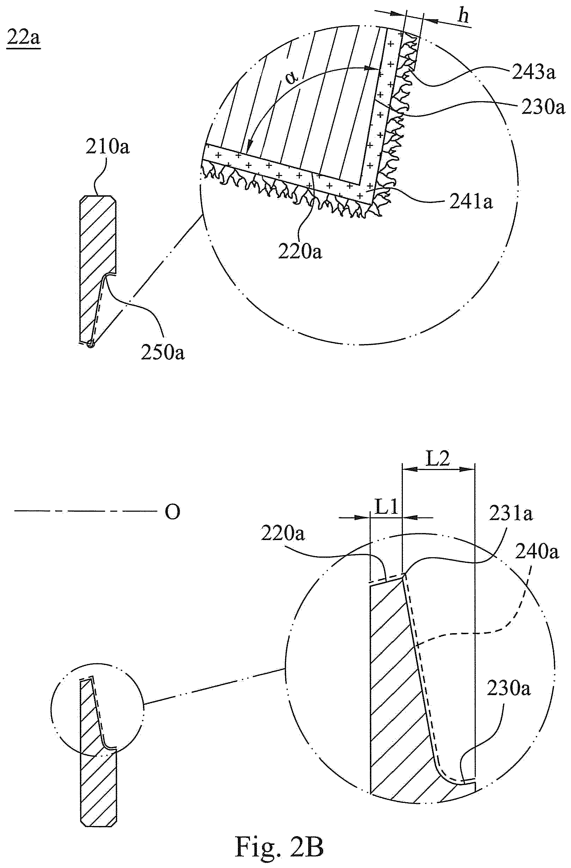

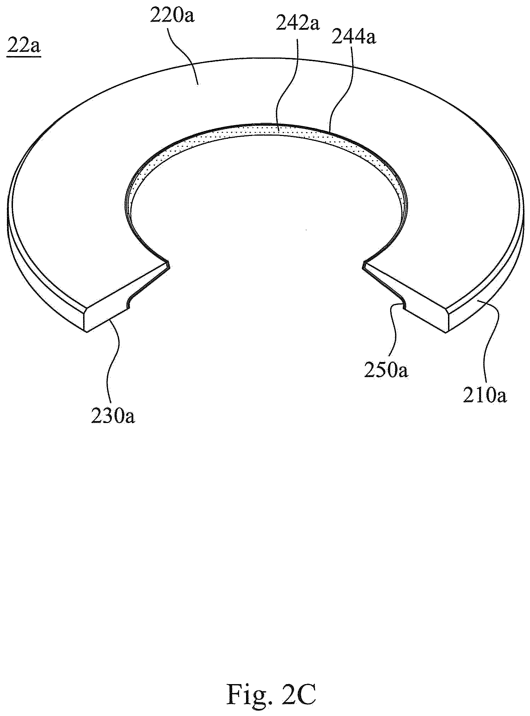

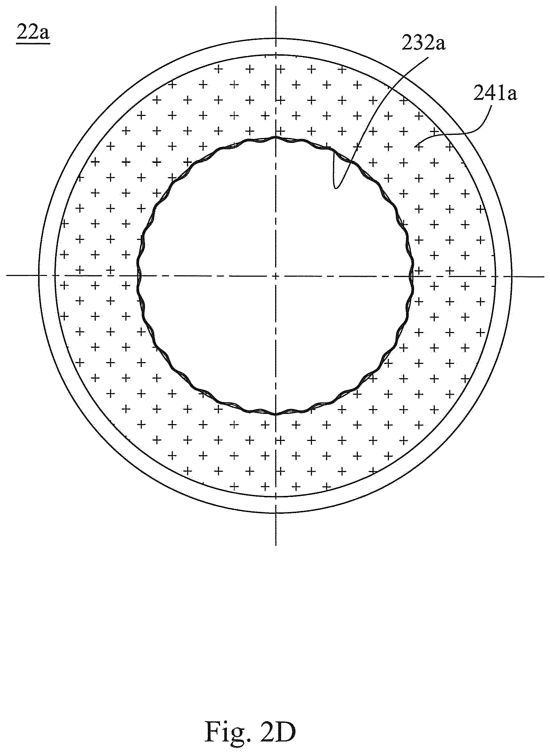

Fig. 2B is an enlarged view of the metal light blocking element 22a according to the 2nd example in Fig. 2A. Fig. 2C is a partial cross-section view of the metal light blocking element 22a according to the 2nd example in Fig. 2A. Fig. 2D is a schematic view of the metal light blocking element 22a according to the 2nd example in Fig. 2A. In Figs. 2B to 2D, the metal light blocking element 22a surrounds a central axis O, and includes an outer diameter surface 210a, a first annular surface 220a, a second annular surface 230a and an anti-reflecting layer 240a. The outer diameter surface 210a is defining an outer diameter of the metal light blocking element 22a. The first annular surface 220a is disposed opposite to the outer diameter surface 210a, and the first annular surface 220a is closer to the central axis O than the outer diameter surface 210a to the central axis O. The second annular surface 230a is disposed opposite to the outer diameter surface 210a, the second annular surface 230a is closer to the central axis O than the outer diameter surface 210a to the central axis O, and the first annular surface 220a is connected to the second annular surface 230a to form a minimum opening structure (its reference numeral is omitted), wherein the minimum opening structure is a tip end opening structure so as to provide the optical purpose. The anti-reflecting layer 240a is disposed on the first annular surface 220a and the second annular surface 230a, the anti-reflecting layer 240a covers the minimum opening structure, and the anti-reflecting layer 240a includes a light absorbing layer 241a and a nanostructure layer 242a, wherein the nanostructure layer 242a is disposed on the light absorbing layer 241a. In particular, a connection between the first annular surface 220a and the second annular surface 230a is the minimum opening structure, wherein the anti-reflecting layer 240a covers the minimum opening structure, and the minimum opening structure surrounds the central axis O to form a minimum opening 231a. It should be mentioned that Fig. 2B shows the enlarged views of two kinds of the magnifications to clearly indicate the structural details of the metal light blocking element 22a.

The nanostructure layer 242a includes a plurality of nanostructure units 243a, wherein a nano-ridged convex structure layer (its reference numeral is omitted) is formed via the nanostructure units 243a, the nano-ridged convex structure layer is directly coated on the light absorbing layer 241a, and whether the disposition of a connecting layer can be decided depending on the selection of the material. Therefore, the manufacturing method of coating the nanostructure units 243a on the inner opening can be provided, and the feasibility of fast and easy mass production can be achieved. In detail, the nano-ridged convex structure layer can be made of an aluminum oxide material, but the present disclosure is not limited thereto.

In Figs. 2B and 2C, the metal light blocking element 22a further includes a recess structure 250a, wherein the recess structure 250a is disposed on the second annular surface 230a, the recess structure 250a caves towards the outer diameter surface 210a, and at least one portion of the anti-reflecting layer 240a is disposed on the recess structure 250a. Therefore, the light trap structure can be formed to reduce the possibility of forming the stray light.

In Fig. 2D, the tip end opening structure has at least one shrinkage cavity structure 232a, wherein the shrinkage cavity structure 232a is closer to the central axis O than a maximum outer diameter of the tip end opening structure to the central axis O. By the light blocking design of the shrinkage cavity structure 232a, the possibility of forming the stray light of the tip end opening structure can be reduced. Moreover, the non-imaging light can be more efficiently blocked by the cooperation between the anti-reflecting layer 240a and the shrinkage cavity structure 232a so as to efficiently reduce the possibility of image ghosting.

In Fig. 2B, an angle is formed between the first annular surface 220a and the second annular surface 230a, and the angle is $\alpha$; a height of each of the nanostructure units 243a is h; a length of the first annular surface 220a along the central axis O is L1, and a length of the second annular surface 230a along the central axis O is L2, the following conditions of Table 2A are satisfied.

| Table 2A, the 2nd example | | | |
|---|---|---|---|
| $\alpha$ (degree) | 85 | L2 (mm) | 0.14 |
| h (nm) | 100 | L1+L2 (mm) | 0.2 |
| L1 (mm) | 0.06 | L1/L2 | 0.43 |

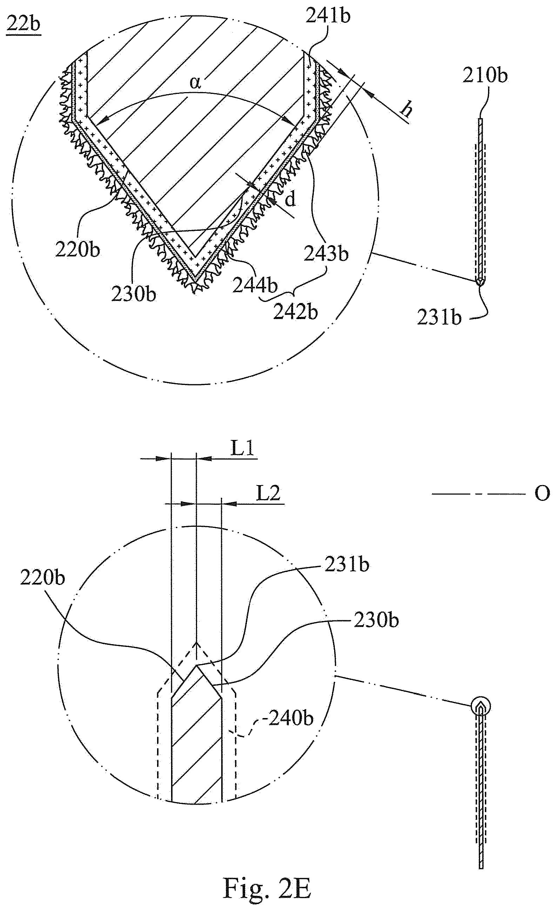

Fig. 2E is an enlarged view of the metal light blocking element 22b according to the 2nd example in Fig. 2A. In Fig. 2E, the metal light blocking element 22b surrounds a central axis O, and includes an outer diameter surface 210b, a first annular surface 220b, a second annular surface 230b and an anti-reflecting layer 240b. The outer diameter surface 210b is defining an outer diameter of the metal light blocking element 22b. The first annular surface 220b is disposed opposite to the outer diameter surface 210b, and the first annular surface 220b is closer to the central axis O than the outer diameter surface 210b to the central axis O. The second annular surface 230b is disposed opposite to the outer diameter surface 210b, the second annular surface 230b is closer to the central axis O than the outer diameter surface 210b to the central axis O, and the first annular surface 220b is connected to the second annular surface 230b to form a minimum opening structure (its reference numeral is omitted), wherein the minimum opening structure is a tip end opening structure so as to provide the optical purpose. The anti-reflecting layer 240b is disposed on the first annular surface 220b and the second annular surface 230b, the anti-reflecting layer 240b covers the minimum opening structure, and the anti-reflecting layer 240b includes a light absorbing layer 241b and a nanostructure layer 242b, wherein the nanostructure layer 242b is disposed on the light absorbing layer 241b. In particular, a connection between the first annular surface 220b and the second annular surface 230b is the minimum opening structure, wherein the anti-reflecting layer 240b covers the minimum opening structure, and the minimum opening structure surrounds the central axis O to form a minimum opening 231b. It should be mentioned that Fig. 2E shows the enlarged views of two kinds of the magnifications to clearly indicate the structural details of the metal light blocking element 22b.

The nanostructure layer 242b includes a plurality of nanostructure units 243b and a connecting layer 244b, wherein a nano-ridged convex structure layer (its reference numeral is omitted) is formed via the nanostructure units 243b, and the connecting layer 244b is disposed between the light absorbing layer 241b and the nano-ridged convex structure layer. Therefore, the manufacturing method of coating the nanostructure units 243b on the inner opening can be provided, and the feasibility of fast and easy mass production can be achieved. Moreover, there is no gap between a top of the connecting layer 244b and a bottom of the nano-ridged convex structure layer, that is, the connecting layer 244b is tightly connected to the nano-ridged convex structure layer. Therefore, the nanostructure layer 242b has the stronger structural stability. In detail, the nano-ridged convex structure layer can be made of an aluminum oxide material, and the connecting layer 244b can be made of a silicon dioxide material, but the present disclosure is not limited thereto.

An angle is formed between the first annular surface 220b and the second annular surface 230b, and the angle is $\alpha$; a thickness of the connecting layer 244b is d; a height of each of the nanostructure units 243b is h; a length of the first annular surface 220b along the central axis O is L1, and a length of the second annular surface 230b along the central axis O is L2, the following conditions of Table 2B are satisfied.

| Table 2B, the 2nd example | | | |
|---|---|---|---|
| $\alpha$ (degree) | 75 | L2 (mm) | 0.009 |
| d (nm) | 30 | L1+L2 (mm) | 0.018 |
| h (nm) | 90 | L1/L2 | 1 |
| L1 (mm) | 0.009 | | |

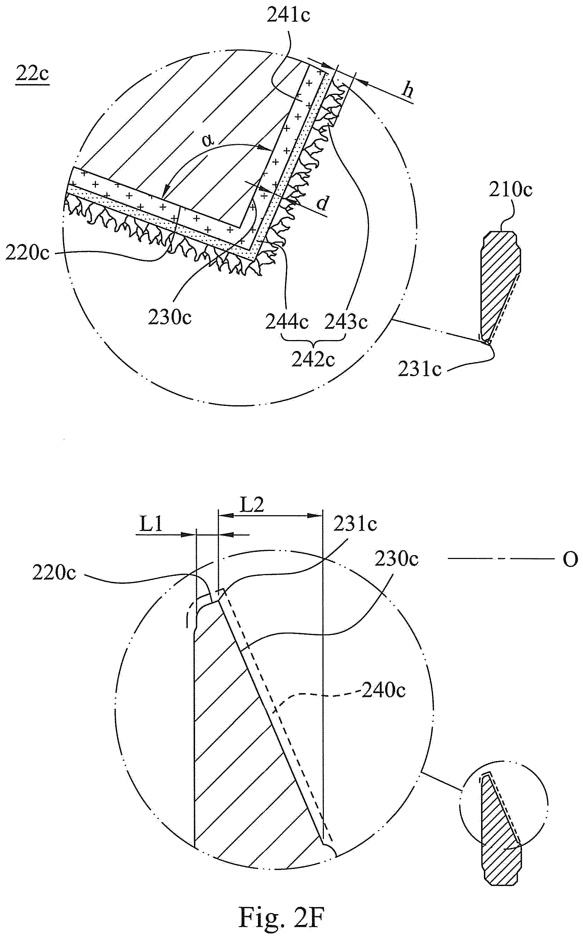

Fig. 2F is an enlarged view of the metal light blocking element 22c according to the 2nd example in Fig. 2A. In Fig. 2F, the metal light blocking element 22c surrounds a central axis O, and includes an outer diameter surface 210c, a first annular surface 220c, a second annular surface 230c and an anti-reflecting layer 240c. The outer diameter surface 210c is defining an outer diameter of the metal light blocking element 22c. The first annular surface 220c is disposed opposite to the outer diameter surface 210c, and the first annular surface 220c is closer to the central axis O than the outer diameter surface 210c to the central axis O. The second annular surface 230c is disposed opposite to the outer diameter surface 210c, the second annular surface 230c is closer to the central axis O than the outer diameter surface 210c to the central axis O, and the first annular surface 220c is connected to the second annular surface 230c to form a minimum opening structure (its reference numeral is omitted), wherein the minimum opening structure is a tip end opening structure so as to provide the optical purpose. The anti-reflecting layer 240c is disposed on the first annular surface 220c and the second annular surface 230c, the anti-reflecting layer 240c covers the minimum opening structure, and the anti-reflecting layer 240c includes a light absorbing layer 241c and a nanostructure layer 242c, wherein the nanostructure layer 242c is disposed on the light absorbing layer 241c. In particular, a connection between the first annular surface 220c and the second annular surface 230c is the minimum opening structure, wherein the anti-reflecting layer 240c covers the minimum opening structure, and the minimum opening structure surrounds the central axis O to form a minimum opening 231c. It should be mentioned that Fig. 2F shows the enlarged views of two kinds of the magnifications to clearly indicate the structural details of the metal light blocking element 22c.

The nanostructure layer 242c includes a plurality of nanostructure units 243c and a connecting layer 244c, wherein a nano-ridged convex structure layer (its reference numeral is omitted) is formed via the nanostructure units 243c, and the connecting layer 244c is disposed between the light absorbing layer 241c and the nano-ridged convex structure layer. Therefore, the manufacturing method of coating the nanostructure units 243c on the inner opening can be provided, and the feasibility of fast and easy mass production can be achieved. Moreover, there is no gap between a top of the connecting layer 244c and a bottom of the nano-ridged convex structure layer, that is, the connecting layer 244c is tightly connected to the nano-ridged convex structure layer. Therefore, the nanostructure layer 242c has the stronger structural stability. In detail, the nano-ridged convex structure layer can be made of an aluminum oxide material, and the connecting layer 244c can be made of a silicon dioxide material, but the present disclosure is not limited thereto.

An angle is formed between the first annular surface 220c and the second annular surface 230c, and the angle is $\alpha$; a thickness of the connecting layer 244c is d; a height of each of the nanostructure units 243c is h; a length of the first annular surface 220c along the central axis O is L1, and a length of the second annular surface 230c along the central axis O is L2, the following conditions of Table 2C are satisfied.

| Table 2C, the 2nd example | | | |
|---|---|---|---|
| $\alpha$ (degree) | 93 | L2 (mm) | 0.213 |
| d (nm) | 90 | L1+L2 (mm) | 0.258 |
| h (nm) | 150 | L1/L2 | 0.21 |
| L1 (mm) | 0.045 | | |

It should be mentioned that the light absorbing layers 241a, 241b, 241c and the nanostructure layers 242a, 242b, 242c are coated on the minimum opening structures and the surface of the periphery of the minimum opening structures of the metal light blocking elements 22a, 22b, 22c via the special process to prevent from forming the additional non-imaging light, respectively, wherein the incident light incident on surfaces of the metal light blocking elements 22a, 22b, 22c can be guided to the light absorbing layers 241a, 241b, 241c which are underlying via the nanostructure layers 242a, 242b, 242c, respectively, and the light is absorbed via the light absorbing layers 241a, 241b, 241c, so that all of the surfaces of the metal light blocking elements 22a, 22b, 22c and the minimum opening structures have the low-reflecting characteristic to provide the higher light blocking efficiency. Moreover, each of the light absorbing layers 241a, 241b, 241c is made of a carbon black material to enhance the light absorption rate and provide the uniformity of each of the light absorbing layers 241a, 241b, 241c, and each of the metal light blocking elements 22a, 22b, 22c can be made of a free machine brass or a copper alloy, but the present disclosure is not limited thereto. Moreover, the dotted line in Figs. 2A, 2B, 2E and 2F is configured to indicate the disposing range of the anti-reflecting layers 240a, 240b, 240c.

<3rd example>

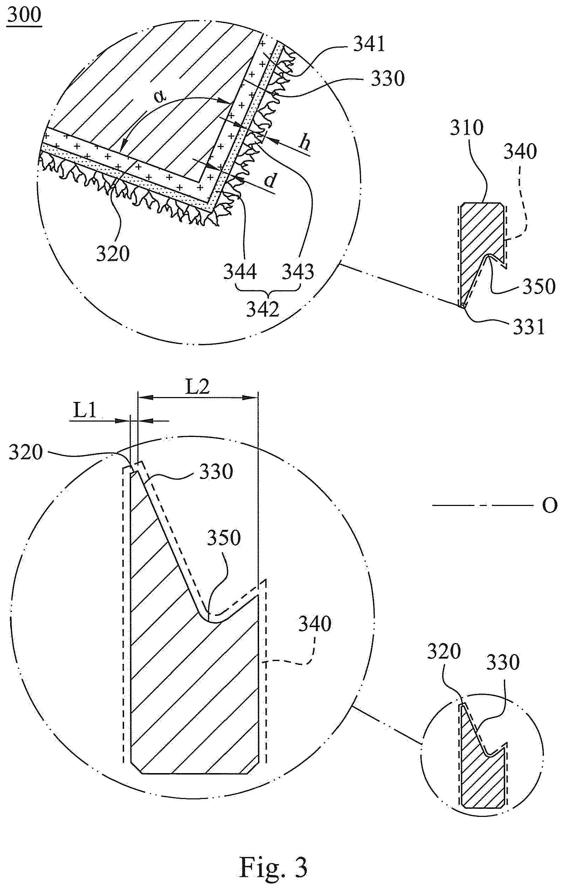

Fig. 3 is an enlarged view of a metal light blocking element 300 according to the 3rd example of the present disclosure. In Fig. 3, the metal light blocking element 300 surrounds a central axis O, and includes an outer diameter surface 310, a first annular surface 320, a second annular surface 330 and an anti-reflecting layer 340. The outer diameter surface 310 is defining an outer diameter of the metal light blocking element 300. The first annular surface 320 is disposed opposite to the outer diameter surface 310, and the first annular surface 320 is closer to the central axis O than the outer diameter surface 310 to the central axis O. The second annular surface 330 is disposed opposite to the outer diameter surface 310, the second annular surface 330 is closer to the central axis O than the outer diameter surface 310 to the central axis O, and the first annular surface 320 is connected to the second annular surface 330 to form a minimum opening structure (its reference numeral is omitted), wherein the minimum opening structure is a tip end opening structure so as to provide the optical purpose. The anti-reflecting layer 340 is disposed on the first annular surface 320 and the second annular surface 330, the anti-reflecting layer 340 covers the minimum opening structure, and the anti-reflecting layer 340 includes a light absorbing layer 341 and a nanostructure layer 342, wherein the nanostructure layer 342 is disposed on the light absorbing layer 341. In particular, a connection between the first annular surface 320 and the second annular surface 330 is the minimum opening structure, wherein the anti-reflecting layer 340 covers the minimum opening structure, and the minimum opening structure surrounds the central axis O to form a minimum opening 331. It should be mentioned that Fig. 3 shows the enlarged views of two kinds of the magnifications to clearly indicate the structural details of the metal light blocking element 300, and the dotted line in Fig. 3 is configured to indicate the disposing range of the anti-reflecting layer 340.

The metal light blocking element 300 is processed via the special process so as to prevent the periphery of an imaging lens set (not shown) from forming the non-imaging light. In particular, the light absorbing layer 341 and the nanostructure layer 342 are coated on the minimum opening structure and the surface of the periphery of the minimum opening structure of the metal light blocking element 300 via the special process to prevent from forming the additional non-imaging light, wherein the incident light incident on a surface of the metal light blocking element 300 can be guided to the light absorbing layer 341 which is underlying via the nanostructure layer 342, and the light is absorbed via the light absorbing layer 341, so that both of the surface of the metal light blocking element 300 and the minimum opening structure have the low-reflecting characteristic to provide the higher light blocking efficiency. Moreover, the light absorbing layer 341 is made of a carbon black material to enhance the light absorption rate and provide the uniformity of the light absorbing layer 341, and the metal light blocking element 300 can be made of a free machine brass or a copper alloy, but the present disclosure is not limited thereto.

The nanostructure layer 342 includes a plurality of nanostructure units 343 and a connecting layer 344, wherein a nano-ridged convex structure layer (its reference numeral is omitted) is formed via the nanostructure units 343, and the connecting layer 344 is disposed between the light absorbing layer 341 and the nano-ridged convex structure layer. Therefore, the manufacturing method of coating the nanostructure units 343 on the inner opening can be provided, and the feasibility of fast and easy mass production can be achieved. Moreover, there is no gap between a top of the connecting layer 344 and a bottom of the nano-ridged convex structure layer, that is, the connecting layer 344 is tightly connected to the nano-ridged convex structure layer. Therefore, the nanostructure layer 342 has the stronger structural stability. In detail, the nano-ridged convex structure layer can be made of an aluminum oxide material, and the connecting layer 344 can be made of a silicon dioxide material, but the present disclosure is not limited thereto.

The metal light blocking element 300 further includes a recess structure 350, wherein the recess structure 350 is disposed on the second annular surface 330, the recess structure 350 caves towards the outer diameter surface 310, and at least one portion of the anti-reflecting layer 340 is disposed on the recess structure 350. Therefore, the light trap structure can be formed to reduce the possibility of forming the stray light.

An angle is formed between the first annular surface 320 and the second annular surface 330, and the angle is $\alpha$; a thickness of the connecting layer 344 is d; a height of each of the nanostructure units 343 is h; a length of the first annular surface 320 along the central axis O is L1, and a length of the second annular surface 330 along the central axis O is L2, the following conditions of Table 3A are satisfied.

| Table 3A, the 3rd example | | | |
|---|---|---|---|
| $\alpha$ (degree) | 93 | L2 (mm) | 0.32 |
| d (nm) | 200 | L1+L2 (mm) | 0.34 |
| h (nm) | 300 | L1/L2 | 0.0625 |
| L1 (mm) | 0.02 | | |

<4th example>

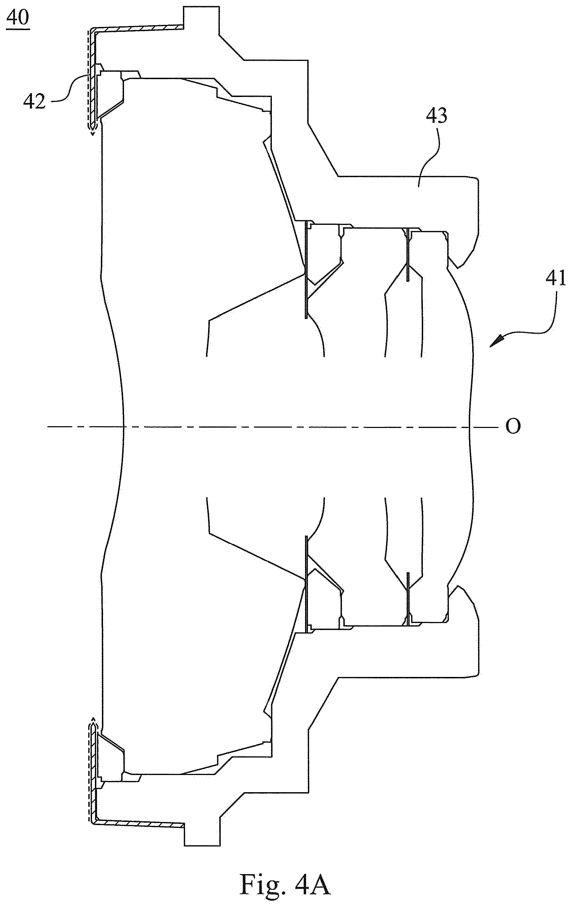

Fig. 4A is a schematic view of an imaging lens assembly module 40 according to the 4th example of the present disclosure. In Fig. 4A, the imaging lens assembly module 40 includes an imaging lens set 41, a metal light blocking element 42 and a lens barrel 43, wherein the metal light blocking element 42 is disposed opposite to the imaging lens set 41, the metal light blocking element 42 is disposed on an object side of the imaging lens set 41, and the lens barrel 43 is configured to accommodate the imaging lens set 41. Further, the metal light blocking element 42 is disposed on an outer surface of the lens barrel 43 so as to easily assemble for quickly achieving the light blocking effect. In particular, the metal light blocking element 42 is an auxiliary light blocking element, wherein the auxiliary light blocking element can be an additional element which is disposed outside the imaging lens assembly module 40 so as to cooperate the structure of the imaging lens assembly module 40 for blocking the portion of the imaging lens assembly module 40 which the stray light is easily formed, but the present disclosure is not limited thereto.

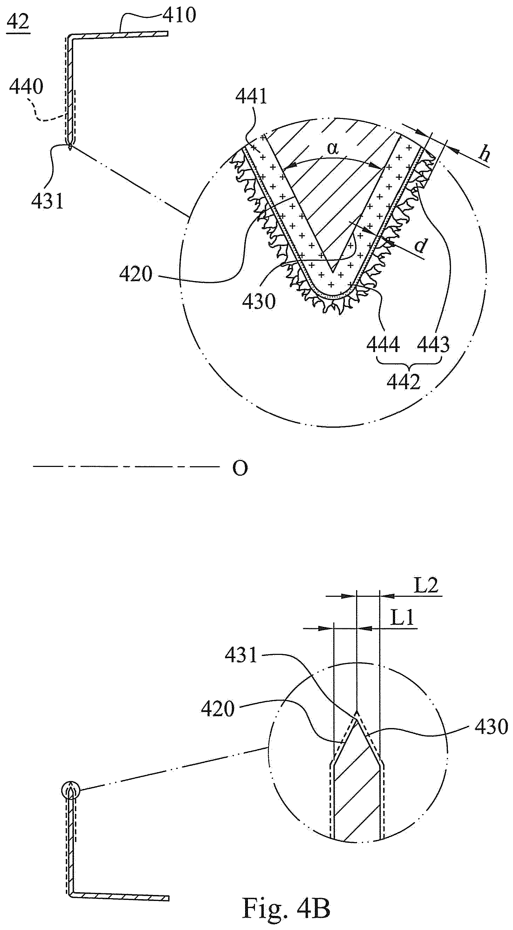

Fig. 4B is an enlarged view of a metal light blocking element 42 according to the 4th example in Fig. 4A. In Fig. 4B, the metal light blocking element 42 surrounds a central axis O, and includes an outer diameter surface 410, a first annular surface 420, a second annular surface 430 and an anti-reflecting layer 440. The outer diameter surface 410 is defining an outer diameter of the metal light blocking element 42. The first annular surface 420 is disposed opposite to the outer diameter surface 410, and the first annular surface 420 is closer to the central axis O than the outer diameter surface 410 to the central axis O. The second annular surface 430 is disposed opposite to the outer diameter surface 410, the second annular surface 430 is closer to the central axis O than the outer diameter surface 410 to the central axis O, and the first annular surface 420 is connected to the second annular surface 430 to form a minimum opening structure (its reference numeral is omitted), wherein the minimum opening structure is a tip end opening structure so as to provide the optical purpose. The anti-reflecting layer 440 is disposed on the first annular surface 420 and the second annular surface 430, the anti-reflecting layer 440 covers the minimum opening structure, and the anti-reflecting layer 440 includes a light absorbing layer 441 and a nanostructure layer 442, wherein the nanostructure layer 442 is disposed on the light absorbing layer 441. In particular, a connection between the first annular surface 420 and the second annular surface 430 is the minimum opening structure, wherein the anti-reflecting layer 440 covers the minimum opening structure, and the minimum opening structure surrounds the central axis O to form a minimum opening 431. It should be mentioned that Fig. 4B shows the enlarged views of two kinds of the magnifications to clearly indicate the structural details of the metal light blocking element 42, and the dotted line in Figs. 4A and 4B is configured to indicate the disposing range of the anti-reflecting layer 440.

The metal light blocking element 42 is processed via the special process so as to prevent the periphery of the imaging lens set 41 from forming the non-imaging light. In particular, the light absorbing layer 441 and the nanostructure layer 442 are coated on the minimum opening structure and the surface of the periphery of the minimum opening structure of the metal light blocking element 42 via the special process to prevent from forming the additional non-imaging light, wherein the incident light incident on a surface of the metal light blocking element 42 can be guided to the light absorbing layer 441 which is underlying via the nanostructure layer 442, and the light is absorbed via the light absorbing layer 441, so that both of the surface of the metal light blocking element 42 and the minimum opening structure have the low-reflecting characteristic to provide the higher light blocking efficiency. Moreover, the light absorbing layer 441 is made of a carbon black material to enhance the light absorption rate and provide the uniformity of the light absorbing layer 441, and the metal light blocking element 42 can be made of a free machine brass or a copper alloy, but the present disclosure is not limited thereto.

The nanostructure layer 442 includes a plurality of nanostructure units 443 and a connecting layer 444, wherein a nano-ridged convex structure layer (its reference numeral is omitted) is formed via the nanostructure units 443, and the connecting layer 444 is disposed between the light absorbing layer 441 and the nano-ridged convex structure layer. Therefore, the manufacturing method of coating the nanostructure units 443 on the inner opening can be provided, and the feasibility of fast and easy mass production can be achieved. Moreover, there is no gap between a top of the connecting layer 444 and a bottom of the nano-ridged convex structure layer, that is, the connecting layer 444 is tightly connected to the nano-ridged convex structure layer. Therefore, the nanostructure layer 442 has the stronger structural stability. In detail, the nano-ridged convex structure layer can be made of an aluminum oxide material, and the connecting layer 444 can be made of a silicon dioxide material, but the present disclosure is not limited thereto.

An angle is formed between the first annular surface 420 and the second annular surface 430, and the angle is $\alpha$; a thickness of the connecting layer 444 is d; a height of each of the nanostructure units 443 is h; a length of the first annular surface 420 along the central axis O is L1, and a length of the second annular surface 430 along the central axis O is L2, the following conditions of Table 4A are satisfied.

| Table 4A, the 4th example | | | |
|---|---|---|---|
| $\alpha$ (degree) | 53 | L2 (mm) | 0.03 |
| d (nm) | 80 | L1+L2 (mm) | 0.06 |
| h (nm) | 260 | L1/L2 | 1 |
| L1 (mm) | 0.03 | | |

<5th example>

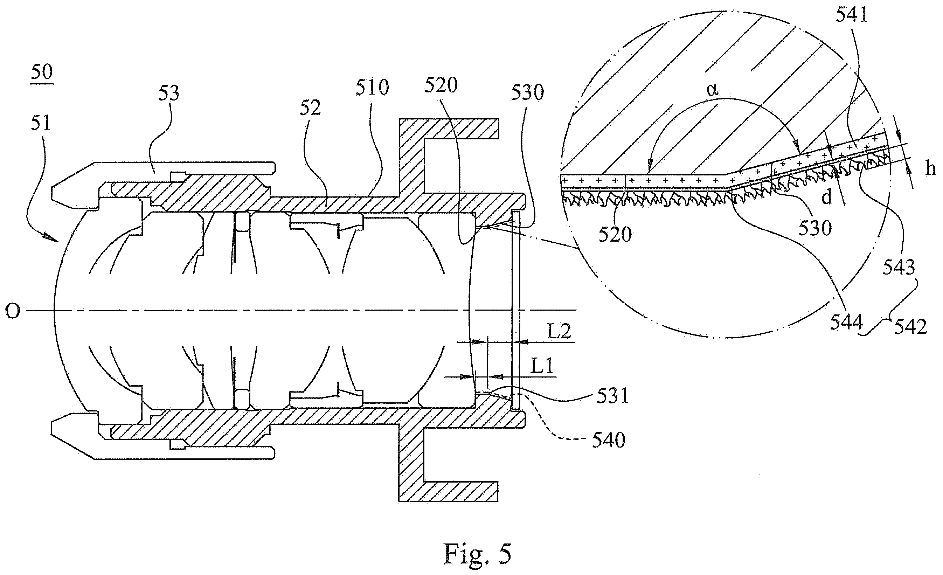

Fig. 5 is a schematic view of the imaging lens assembly module 50 according to the 5th example of the present disclosure. In Fig. 5, the imaging lens assembly module 50 includes an imaging lens set 51, a metal light blocking element 52 and a lens barrel 53, wherein the metal light blocking element 52 is disposed opposite to the imaging lens set 51, the metal light blocking element 52 is disposed on an image side of the imaging lens set 51, and the lens barrel 53 is configured to accommodate the imaging lens set 51 and the metal light blocking element 52. Further, the metal light blocking element 52 is a lens barrel for accommodating the imaging lens set 51, and the metal light blocking element 52 is configured to block the non-imaging light. It should be mentioned that Fig. 5 shows the enlarged views of two kinds of the magnifications to clearly indicate the structural details of the metal light blocking element 52.

The metal light blocking element 52 surrounds a central axis O, and includes an outer diameter surface 510, a first annular surface 520, a second annular surface 530 and an anti-reflecting layer 540. The outer diameter surface 510 is defining an outer diameter of the metal light blocking element 52. The first annular surface 520 is disposed opposite to the outer diameter surface 510, and the first annular surface 520 is closer to the central axis O than the outer diameter surface 510 to the central axis O. The second annular surface 530 is disposed opposite to the outer diameter surface 510, the second annular surface 530 is closer to the central axis O than the outer diameter surface 510 to the central axis O, and the first annular surface 520 is connected to the second annular surface 530 to form a minimum opening structure (its reference numeral is omitted), wherein the minimum opening structure is a tip end opening structure so as to provide the optical purpose. The anti-reflecting layer 540 is disposed on the first annular surface 520 and the second annular surface 530, the anti-reflecting layer 540 covers the minimum opening structure, and the anti-reflecting layer 540 includes a light absorbing layer 541 and a nanostructure layer 542, wherein the nanostructure layer 542 is disposed on the light absorbing layer 541. In particular, a connection between the first annular surface 520 and the second annular surface 530 is the minimum opening structure, wherein the anti-reflecting layer 540 covers the minimum opening structure, and the minimum opening structure surrounds the central axis O to form a minimum opening 531. It should be mentioned that the dotted line in Fig. 5 is configured to indicate the disposing range of the anti-reflecting layer 540.

The metal light blocking element 52 is processed via the special process so as to prevent the periphery of the imaging lens set 51 from forming the non-imaging light. In particular, the light absorbing layer 541 and the nanostructure layer 542 are coated on the minimum opening structure and the surface of the periphery of the minimum opening structure of the metal light blocking element 52 via the special process to prevent from forming the additional non-imaging light, wherein the incident light incident on a surface of the metal light blocking element 52 can be guided to the light absorbing layer 541 which is underlying via the nanostructure layer 542, and the light is absorbed via the light absorbing layer 541, so that both of the surface of the metal light blocking element 52 and the minimum opening structure have the low-reflecting characteristic to provide the higher light blocking efficiency. Moreover, the light absorbing layer 541 is made of a carbon black material to enhance the light absorption rate and provide the uniformity of the light absorbing layer 541, and the metal light blocking element 52 can be made of a free machine brass or a copper alloy, but the present disclosure is not limited thereto.

The nanostructure layer 542 includes a plurality of nanostructure units 543 and a connecting layer 544, wherein a nano-ridged convex structure layer (its reference numeral is omitted) is formed via the nanostructure units 543, and the connecting layer 544 is disposed between the light absorbing layer 541 and the nano-ridged convex structure layer. Therefore, the manufacturing method of coating the nanostructure units 543 on the inner opening can be provided, and the feasibility of fast and easy mass production can be achieved. Moreover, there is no gap between a top of the connecting layer 544 and a bottom of the nano-ridged convex structure layer, that is, the connecting layer 544 is tightly connected to the nano-ridged convex structure layer. Therefore, the nanostructure layer 542 has the stronger structural stability. In detail, the nano-ridged convex structure layer can be made of an aluminum oxide material, and the connecting layer 544 can be made of a silicon dioxide material, but the present disclosure is not limited thereto.

An angle is formed between the first annular surface 520 and the second annular surface 530, and the angle is $\alpha$; a thickness of the connecting layer 544 is d; a height of each of the nanostructure units 543 is h; a length of the first annular surface 520 along the central axis O is L1, and a length of the second annular surface 530 along the central axis O is L2, the following conditions of Table 5A are satisfied.

| Table 5A, the 5th example | | | |
|---|---|---|---|
| $\alpha$ (degree) | 165 | L2 (mm) | 0.99 |
| d (nm) | 70 | L1+L2 (mm) | 1.49 |
| h (nm) | 200 | L1/L2 | 0.51 |
| L1 (mm) | 0.5 | | |

<6th example>

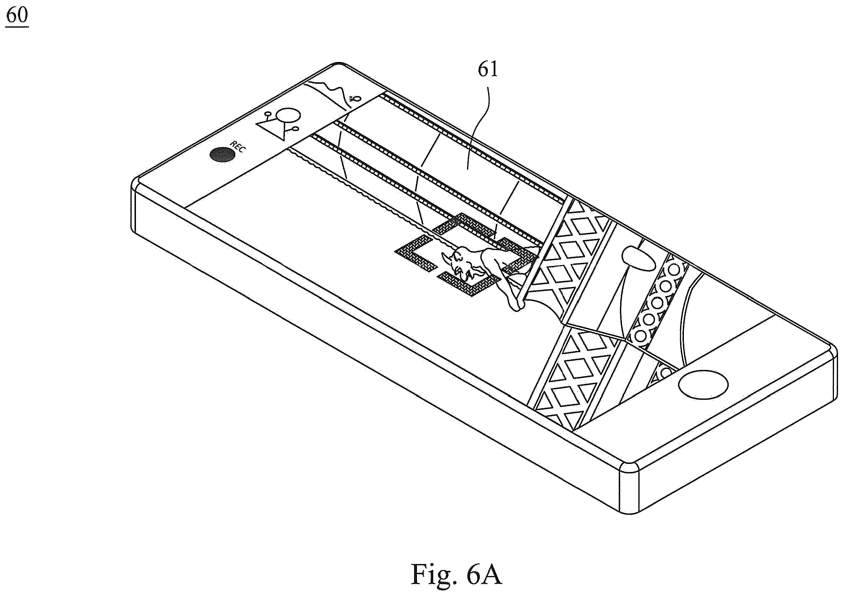

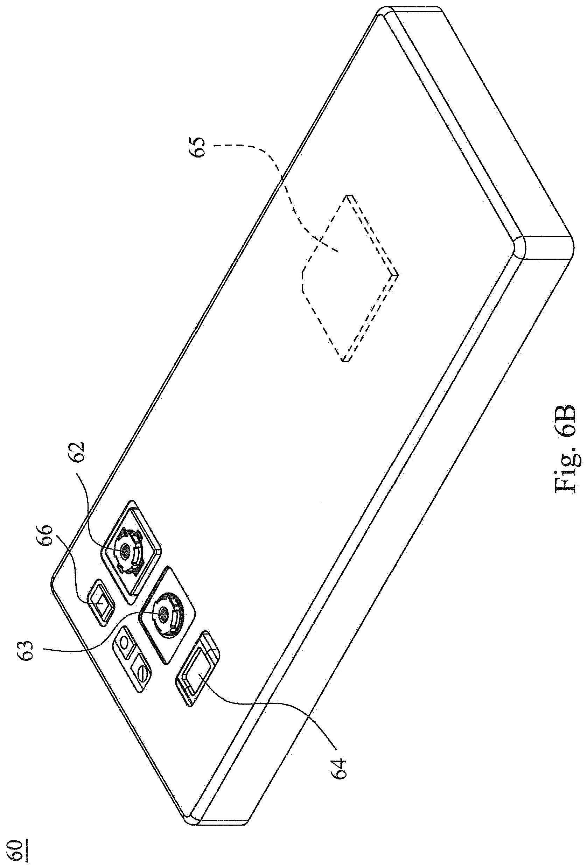

Fig. 6A is a schematic view of an electronic device 60 according to the 6th example of the present disclosure. Fig. 6B is another schematic view of the electronic device 60 according to the 6th example in Fig. 6A. In Figs. 6A and 6B, the electronic device 60 is a smart phone, and includes an imaging lens assembly module (its reference numeral is omitted), an image sensor (not shown) and a user interface 61, wherein the imaging lens assembly module includes an imaging lens set (not shown) and at least one metal light blocking element (not shown), the image sensor is disposed on an image surface (not shown) of the imaging lens assembly module, and the metal light blocking element is disposed opposite to the imaging lens set. Moreover, the imaging lens assembly module can be an ultra-wide angle camera module 62, a high resolution camera module 63 and a telephoto camera module 64, and the user interface 61 is a touch screen, but the present disclosure is not limited thereto. In particular, the metal light blocking element can be one of the metal light blocking elements according to the aforementioned 1st example to the 5th example, but the present disclosure is not limited thereto.

Users enter a shooting mode via the user interface 61, wherein the user interface 61 is configured to display the scene, and the shooting angle can be manually adjusted to switch the ultra-wide angle camera module 62, the high resolution camera module 63 and the telephoto camera module 64. At this moment, the imaging light is gathered on the image sensor via the imaging lens assembly module, and an electronic signal about an image is output to an image signal processor (ISP) 65.

In Fig. 6B, to meet a specification of the electronic device 60, the electronic device 60 can further include an optical anti-shake mechanism (not shown). Furthermore, the electronic device 60 can further include at least one focusing assisting module (its reference numeral is omitted) and at least one sensing element (not shown). The focusing assisting module can be a flash module 66 for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments. Accordingly, the imaging lens assembly module of the electronic device 60 equipped with an auto-focusing mechanism and the optical anti-shake mechanism can be enhanced to achieve the superior image quality. Furthermore, the electronic device 60 according to the present disclosure can have a capturing function with multiple modes, such as taking optimized selfies, high dynamic range (HDR) under a low light condition, 4K resolution recording and so on. Furthermore, the users can visually see a captured image of the camera through the user interface 61 and manually operate the view finding range on the user interface 61 to achieve the autofocus function of what you see is what you get.

Moreover, the imaging lens assembly module, the image sensor, the optical anti-shake mechanism, the sensing element and the focusing assisting module can be disposed on a flexible printed circuit board (FPC) (not shown) and electrically connected to the associated components, such as the image signal processor 65, via a connector (not shown) to perform a capturing process. Since the current electronic devices, such as smart phones, have a tendency of being compact, the way of firstly disposing the imaging lens assembly module and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the imaging lens assembly module can also be controlled more flexibly via the touch screen of the electronic device. According to the 6th example, the electronic device 60 can include a plurality of sensing elements and a plurality of focusing assisting modules. The sensing elements and the focusing assisting modules are disposed on the flexible printed circuit board and at least one other flexible printed circuit board (not shown) and electrically connected to the associated components, such as the image signal processor 65, via corresponding connectors to perform the capturing process. In other examples (not shown herein), the sensing elements and the focusing assisting modules can also be disposed on the main board of the electronic device or carrier boards of other types according to requirements of the mechanical design and the circuit layout.

Furthermore, the electronic device 60 can further include, but not be limited to, a display, a control unit, a storage unit, a random access memory (RAM), a read-only memory (ROM), or the combination thereof.

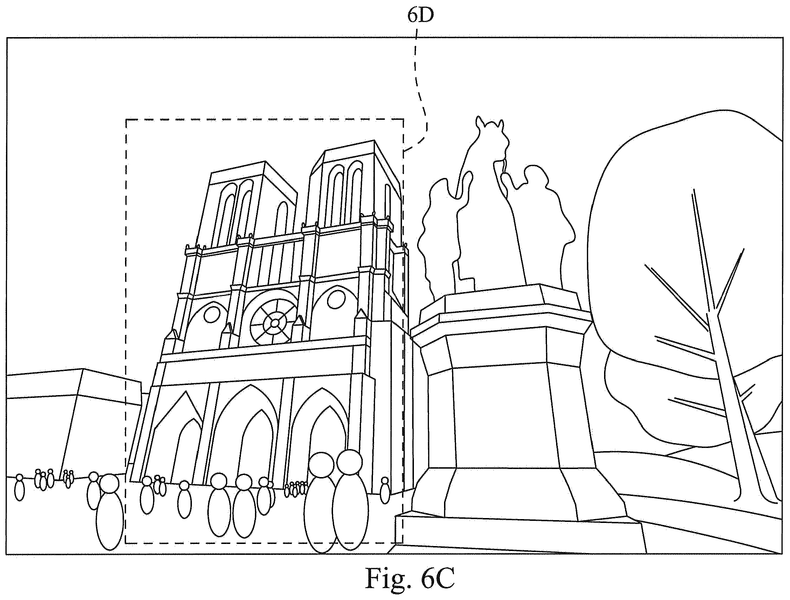

Fig. 6C is a schematic view of an image captured via the electronic device 60 according to the 6th example in Fig. 6A. In Fig. 6C, the larger range of the image can be captured via the ultra-wide angle camera module 62, and the ultra-wide angle camera module 62 has the function of accommodating wider range of the scene.

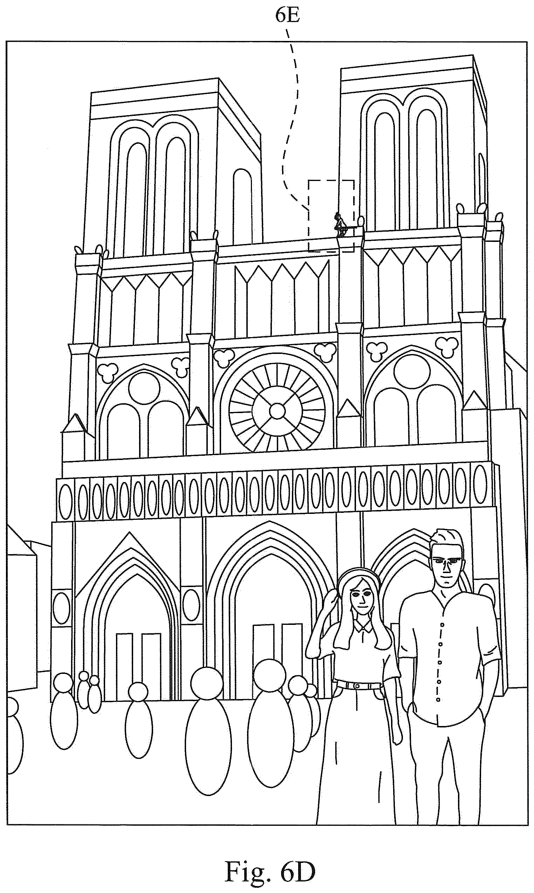

Fig. 6D is another schematic view of an image captured via the electronic device 60 according to the 6th example in Fig. 6A. In Fig. 6D, the image of the certain range with the high resolution can be captured via the high resolution camera module 63, and the high resolution camera module 63 has the function of the high resolution and the low deformation.

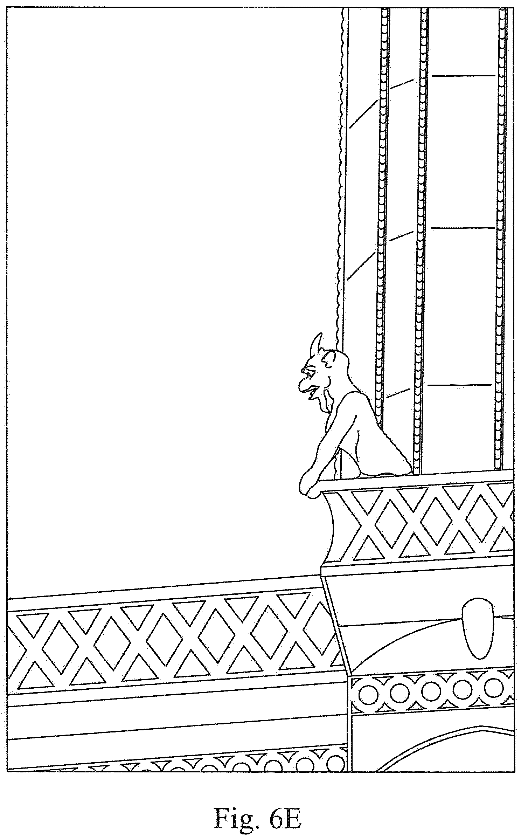

Fig. 6E is still another schematic view of an image captured via the electronic device 60 according to the 6th example in Fig. 6A. In Fig. 6E, the telephoto camera module 64 has the enlarging function of the high magnification, and the distant image can be captured and enlarged with high magnification via the telephoto camera module 64.

In Figs. 6C to 6E, the zooming function can be obtained via the electronic device 60, when the scene is captured via the imaging lens assembly module with different focal lengths cooperated with the function of image processing.

<7th example>

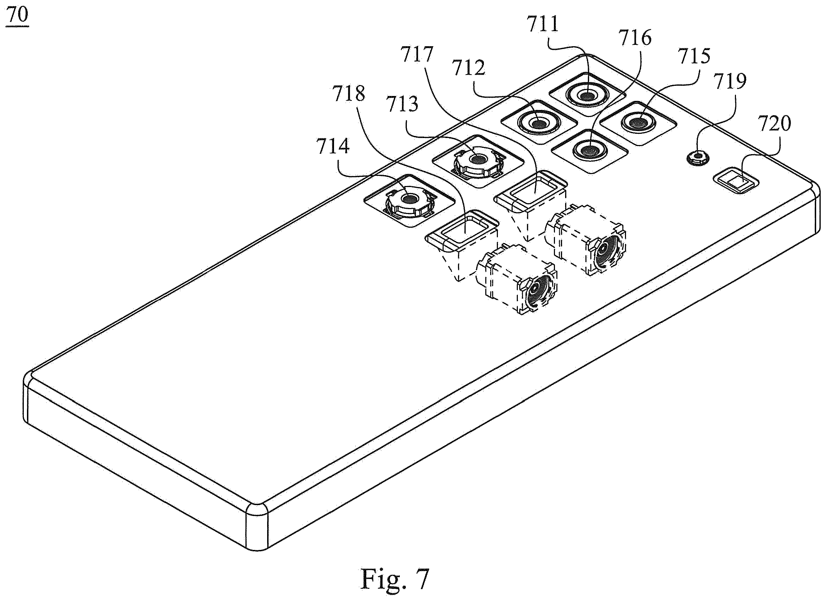

Fig. 7 is a schematic view of an electronic device 70 according to the 7th example of the present disclosure. In Fig. 7, the electronic device 70 is a smart phone, and includes an imaging lens assembly module (its reference numeral is omitted) and an image sensor (not shown), wherein the imaging lens assembly module includes an imaging lens set (not shown) and at least one metal light blocking element (not shown), the image sensor is disposed on an image surface (not shown) of the imaging lens assembly module, and the metal light blocking element is disposed opposite to the imaging lens set. Moreover, the imaging lens assembly module includes ultra-wide angle camera modules 711, 712, wide angle camera modules 713, 714, telephoto camera modules 715, 716, 717, 718 and a Time-Of-Flight (TOF) module 719. The TOF module 719 can be another type of the imaging lens assembly module, and the disposition is not limited thereto. In particular, the metal light blocking element can be one of the metal light blocking elements according to the aforementioned 1st example to the 5th example, but the present disclosure is not limited thereto.

Further, the telephoto camera modules 717, 718 are configured to fold the light, but the present disclosure is not limited thereto.

To meet a specification of the electronic device 70, the electronic device 70 can further include an optical anti-shake mechanism (not shown). Furthermore, the electronic device 70 can further include at least one focusing assisting module (not shown) and at least one sensing element (not shown). The focusing assisting module can be a flash module 720 for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments.

Accordingly, the imaging lens assembly module of the electronic device 70 equipped with an auto-focusing mechanism and the optical anti-shake mechanism can be enhanced to achieve the superior image quality. Furthermore, the electronic device 70 according to the present disclosure can have a capturing function with multiple modes, such as taking optimized selfies, High Dynamic Range (HDR) under a low light condition, 4K Resolution recording and so on.

Further, all of other structures and dispositions according to the 7th example are the same as the structures and the dispositions according to the 6th example, and will not be described again herein.

<8th example>

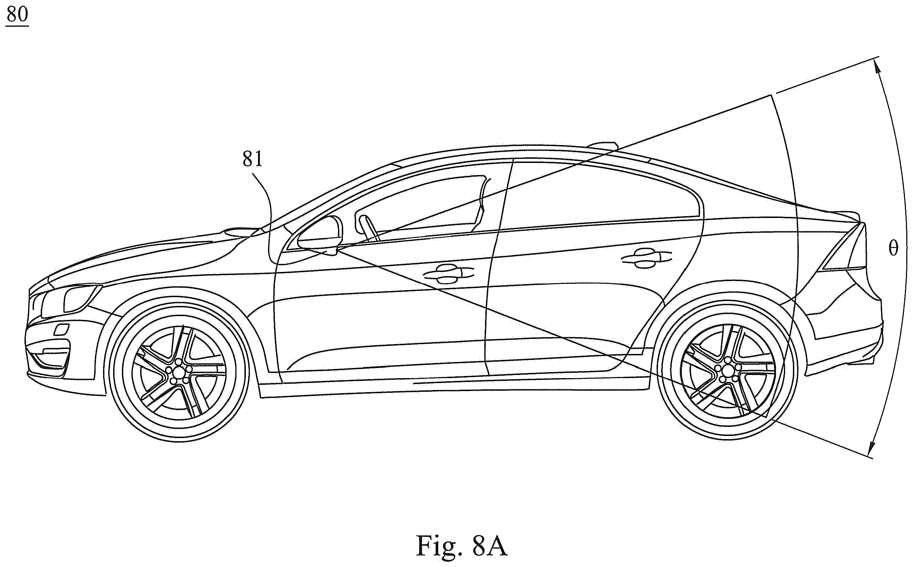

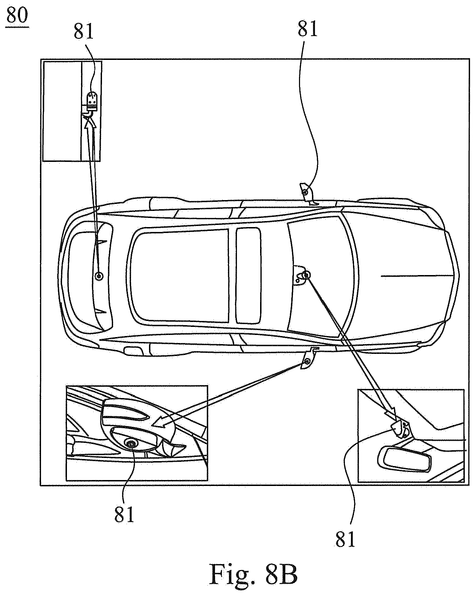

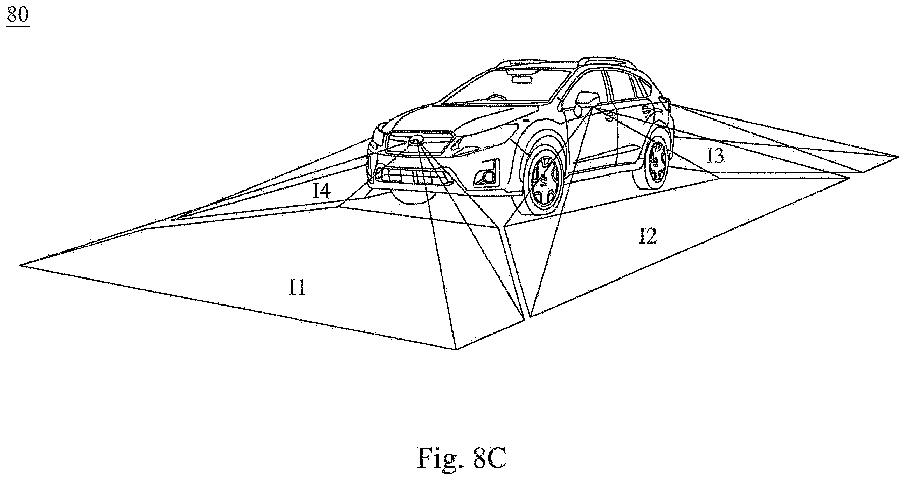

Fig. 8A is a schematic view of a vehicle instrument 80 according to the 8th example of the present disclosure. Fig. 8B is another schematic view of the vehicle instrument 80 according to the 8th example in Fig. 8A. Fig. 8C is still another schematic view of the vehicle instrument 80 according to the 8th example in Fig. 8A. In Figs. 8A to 8C, the vehicle instrument 80 includes a plurality of imaging lens assembly modules 81 and an image sensor (not shown), wherein each of the imaging lens assembly modules 81 includes an imaging lens set (not shown) and at least one metal light blocking element (not shown), the image sensor is disposed on an image surface (not shown) of the imaging lens assembly module 81, and the metal light blocking element is disposed opposite to the imaging lens set. According to the 8th example, a number of the imaging lens assembly modules 81 is six, and the metal light blocking element can be one of the metal light blocking elements according to the aforementioned 1st example to the 5th example, but the present disclosure is not limited thereto.

In Figs. 8A and 8B, the imaging lens assembly modules 81 are automotive imaging lens assembly modules, two of the imaging lens assembly modules 81 are located under rearview mirrors on a left side and a right side, respectively, and the aforementioned imaging lens assembly modules 81 are configured to capture the image information of a visual angle θ. In particular, the visual angle θ can satisfy the following condition: 40 degrees < θ < 90 degrees. Therefore, the image information in the regions of two lanes on the left side and the right side can be captured.

In Fig. 8B, another two of the imaging lens assembly modules 81 can be disposed in the inner space of the vehicle instrument 80. In particular, the aforementioned two imaging lens assembly modules 81 are disposed on a location close to the rearview mirror inside the vehicle instrument 80 and a location close to the rear car window, respectively. Moreover, the imaging lens assembly modules 81 can be further disposed on the rearview mirrors on the left side and the right side except the mirror surface, respectively, but the present disclosure is not limited thereto.

In Fig. 8C, another two of the imaging lens assembly modules 81 can be disposed on a front end of the vehicle instrument 80 and a rear end of the vehicle instrument 80, respectively. By disposing the imaging lens assembly modules 81 on the front end and the rear end of the vehicle instrument 80 and under the rearview mirror on the left side of the vehicle instrument 80 and the right side of the vehicle instrument 80, it is favorable for the drivers obtaining the external space information in addition to the driving seat, such as the external space informations I1, I2, I3, I4, but the present disclosure is not limited thereto. Therefore, more visual angles can be provided to reduce the blind spot, so that the driving safety can be improved. Further, the traffic information outside of the vehicle instrument 80 can be recognized by disposing the imaging lens assembly modules 81 on the periphery of the vehicle instrument 80, so that the function of the automatic driving assistance can be achieved.

## Claims

1. A metal light blocking element (12), surrounding a central axis (O), and **characterized in** comprising:

an outer diameter surface (110) defining an outer diameter of the metal light blocking element (12);
a first annular surface (120) disposed opposite to the outer diameter surface (110), and the first annular surface (120) closer to the central axis (O) than the outer diameter surface (110) to the central axis (O);
a second annular surface (130) disposed opposite to the outer diameter surface (110), the second annular surface (130) closer to the central axis (O) than the outer diameter surface (110) to the central axis (O), and the first annular surface (120) connected to the second annular surface (130) to form a minimum opening structure; and
an anti-reflecting layer (140) disposed on the first annular surface (120) and the second annular surface (130), covering the minimum opening structure, and comprising:

a light absorbing layer (141); and
a nanostructure layer (142) disposed on the light absorbing layer (141);

wherein the nanostructure layer (142) comprises a plurality of nanostructure units (143, 143a, 143b, 143c), a nano-ridged convex structure layer (145) is formed via the nanostructure units (143, 143a, 143b, 143c), and the nanostructure units (143, 143a ,143b, 143c) have a shape of wide bottom and narrow top so as to gradually decrease an equivalent refractive index from the bottom to the top of the nanostructure layer for reducing a reflecting light,

wherein the minimum opening structure is a tip end opening structure, an angle is formed between the first annular surface (120) and the second annular surface (130), the angle is $\alpha$, and the following condition is satisfied:

$$0 \text{ degrees} < \alpha \leq 170 \text{ degrees}.$$

2. The metal light blocking element (12) of claim 1, wherein the light absorbing layer (141) is made of a carbon black material.

3. The metal light blocking element (12) of any of claims 1-2, wherein the nanostructure layer (142) comprises a connecting layer (144), and the connecting layer (144) is disposed between the light absorbing layer (141) and the nano-ridged convex structure layer (145).

4. The metal light blocking element (12) of any of claims 1-3, wherein a thickness of the connecting layer (144) is d, and the following condition is satisfied:

$$30 \text{ nm} \leq d \leq 500 \text{ nm}.$$

5. The metal light blocking element (12) of any of claims 1-4, wherein a height of each of the nanostructure units (143, 143a, 143b, 143c) is h, and the following condition is satisfied:

$$90 \text{ nm} \leq h \leq 350 \text{ nm}.$$

6. The metal light blocking element (12) of any of claims 1-5, wherein the height of each of the nanostructure units (143, 143a, 143b, 143c) is h, and the following condition is satisfied:

$$90 \text{ nm} \leq h \leq 290 \text{ nm}.$$

7. The metal light blocking element (22a) of any of claims 1-6, wherein the tip end opening structure has at least one shrinkage cavity structure (232a), and the at least one shrinkage cavity structure (232a) is closer to the central axis (O) than a maximum outer diameter of the tip end opening structure to the central axis (O).

8. The metal light blocking element (12) of any of claims 1-7, wherein the angle is $\alpha$, and the following condition is satisfied:

$$10 \text{ degrees} \leq \alpha \leq 150 \text{ degrees}.$$

9. The metal light blocking element (12) of any of claims 1-8, wherein the angle is $\alpha$, and the following condition is satisfied:

$$20 \text{ degrees} \leq \alpha \leq 120 \text{ degrees}.$$

10. The metal light blocking element (22a) of any of claims 1-9, further comprising:
a recess structure (250a) disposed on at least one of the first annular surface (220a) and the second annular surface (230a), the recess structure (250a) caving towards the outer diameter surface (210a), and at least one portion of the anti-reflecting layer (240a) disposed on the recess structure (250a).

11. An imaging lens assembly module (10), **characterized in** comprising:

an imaging lens set (11); and
at least one of the metal light blocking element (12) of any of claims 1-10, wherein the at least one metal light blocking element (12) is disposed opposite to the imaging lens set (11).

12. An electronic device (60), **characterized in** comprising:

> the imaging lens assembly module (10) of claim 11; and
> an image sensor disposed on an image surface of the imaging lens assembly module (10).

13. A metal light blocking element (12), surrounding a central axis (O), and **characterized in** comprising:

> an outer diameter surface (110) defining an outer diameter of the metal light blocking element (12);
> a first annular surface (120) disposed opposite to the outer diameter surface (110), and the first annular surface (120) closer to the central axis (O) than the outer diameter surface (110) to the central axis (O);
> a second annular surface (130) disposed opposite to the outer diameter surface (110), the second annular surface (130) closer to the central axis (O) than the outer diameter surface (110) to the central axis (O), and the first annular surface (120) connected to the second annular surface (130) to form a minimum opening structure; and
> an anti-reflecting layer (140) disposed on the first annular surface (120) and the second annular surface (130), covering the minimum opening structure, and comprising:
>
>> a light absorbing layer (141); and
>> a nanostructure layer (142) disposed on the light absorbing layer (141);
>
> wherein the nanostructure layer (142) comprises a plurality of nanostructure units (143, 143a, 143b, 143c), a nano-ridged convex structure layer (145) is formed via the nanostructure units (143, 143a, 143b, 143c), and the The nanostructure units (143, 143a, 143b, 143c) have a shape of wide bottom and narrow top so as to gradually decrease an equivalent refractive index from the bottom to the top of the nanostructure layer for reducing a reflecting light,
> wherein a length of the first annular surface (120) along the central axis (O) is L1, a length of the second annular surface (130) along the central axis (O) is L2, and the following condition is satisfied:

$$0.01 \text{ mm} \leq L1+L2 \leq 3.00 \text{ mm}.$$

14. The metal light blocking element (12) of claim 13, wherein the light absorbing layer (141) is made of a carbon black material.

15. The metal light blocking element (12) of any of claims 13-14, wherein the nanostructure layer (142) comprises a connecting layer (144), and the connecting layer (144) is disposed between the light absorbing layer (141) and the nano-ridged convex structure layer (145).

16. The metal light blocking element (12) of any of claims 13-15, wherein a thickness of the connecting layer (144) is d, and the following condition is satisfied:

$$30 \text{ nm} \leq d \leq 500 \text{ nm}.$$

17. The metal light blocking element (12) of any of claims 13-16, wherein a height of each of the nanostructure units (143, 143a, 143b, 143c) is h, and the following condition is satisfied:

$$90 \text{ nm} \leq h \leq 350 \text{ nm}.$$

18. The metal light blocking element (12) of any of claims 13-17, wherein the height of each of the nanostructure units (143, 143a, 143b, 143c) is h, and the following condition is satisfied:

$$90 \text{ nm} \leq h \leq 290 \text{ nm}.$$

19. The metal light blocking element (12) of any of claims 13-18, wherein the length of the first annular surface (120) along the central axis (O) is L1, the length of the second annular surface (130) along the central axis (O) is L2, and the following condition is satisfied:

$$0.03 \leq L1/L2 \leq 5.$$

20. The metal light blocking element (22a) of any of claims 13-19, further comprising:
a recess structure (250a) disposed on at least one of the first annular surface (220a) and the second annular surface (230a), the recess structure (250a) caving towards the outer diameter surface (210a), and at least one portion of the anti-reflecting layer (240a) disposed on the recess structure (250a).

21. The metal light blocking element (22a) of any of claims 13-20, wherein the minimum opening structure has at least one shrinkage cavity structure (232a), and the at least one shrinkage cavity structure (232a) is closer to the central axis (O) than a maximum outer diameter of the minimum opening structure to the central axis (O).

22. A metal light blocking element (12), surrounding a central axis (O), and **characterized in** comprising:

an outer diameter surface (110) defining an outer diameter of the metal light blocking element (12);
a first annular surface (120) disposed opposite to the outer diameter surface (110), and the first annular surface (120) closer to the central axis (O) than the outer diameter surface (110) to the central axis (O);
a second annular surface (130) disposed opposite to the outer diameter surface (110), the second annular surface (130) closer to the central axis (O) than the outer diameter surface (110) to the central axis (O), and the first annular surface (120) connected to the second annular surface (130); and
an anti-reflecting layer (140) disposed on at least one of the first annular surface (120) and the second annular surface (130), and comprising:

a light absorbing layer (141); and
a nanostructure layer (142) disposed on the light absorbing layer (141);

wherein the nanostructure layer (142) comprises a plurality of nanostructure units (143, 143a, 143b, 143c), a nano-ridged convex structure layer (145) is formed via the nanostructure units (143, 143a, 143b, 143c), and the nanostructure units (143, 143a, 143b, 143c) have a shape of wide bottom and narrow so as to gradually decrease an equivalent refractive index from the bottom to the top of the nanostructure layer for reducing a reflecting light, a height of each of the nanostructure units (143, 143a, 143b, 143c) is h, and the following condition is satisfied:

$$90 \text{ nm} \leq h \leq 350 \text{ nm}.$$

23. The metal light blocking element (12) of claim 22, wherein the height of each of the nanostructure units (143, 143a, 143b, 143c) is h, and the following condition is satisfied:

$$90 \text{ nm} \leq h \leq 290 \text{ nm}.$$

24. The metal light blocking element (12) of any of claims 22-23, wherein the light absorbing layer (141) is made of a carbon black material.

**Patentansprüche**

1. Lichtblockierendes Metallelement (12), das eine Mittelachse (O) umgibt und **dadurch gekennzeichnet ist, dass** es umfasst:

eine Außendurchmesseroberfläche (110), die einen Außendurchmesser des lichtblockierenden Metallelements (12) definiert;
eine erste ringförmige Oberfläche (120), die entgegengesetzt zur Außendurchmesseroberfläche (110) angeordnet ist, und wobei die erste ringförmige Oberfläche (120) näher an der Mittelachse (O) liegt als die Außendurchmesseroberfläche (110) an der Mittelachse (O);
eine zweite ringförmige Oberfläche (130), die entgegengesetzt zur Außendurchmesseroberfläche (110) angeordnet ist, wobei die zweite ringförmige Oberfläche (130) näher an der Mittelachse (O) liegt als die Außendurchmesseroberfläche (110) an der Mittelachse (O) und wobei die erste ringförmige Oberfläche (120) mit der zweiten ringförmigen Oberfläche (130) verbunden ist, um eine Mindestöffnungsstruktur zu bilden; und

eine Antireflexionsschicht (140), die auf der ersten ringförmigen Oberfläche (120) und der zweiten ringförmigen Oberfläche (130) angeordnet ist, die Mindestöffnungsstruktur bedeckt und umfasst:

eine lichtabsorbierende Schicht (141); und
eine Nanostrukturschicht (142), die auf der lichtabsorbierenden Schicht (141) angeordnet ist;

wobei die Nanostrukturschicht (142) eine Vielzahl von Nanostruktureinheiten (143, 143a, 143b, 143c) umfasst, eine nano-gerippte konvexe Strukturschicht (145) über die Nanostruktureinheiten (143, 143a, 143b, 143c) gebildet ist und die Nanostruktureinheiten (143, 143a, 143b, 143c) eine Form mit breiter Unterseite und schmaler Spitze aufweisen, um einen äquivalenten Brechungsindex von der Unterseite zur Spitze der Nanostrukturschicht allmählich zu verringern, um ein reflektiertes Licht zu reduzieren,
wobei die Mindestöffnungsstruktur eine Spitzenendöffnungsstruktur ist, ein Winkel zwischen der ersten ringförmigen Oberfläche (120) und der zweiten ringförmigen Oberfläche (130) gebildet ist, der Winkel $\alpha$ ist und die folgende Bedingung erfüllt ist:

$$0 \text{ Grad} < \alpha \leq 170 \text{ Grad.}$$

2. Lichtblockierendes Metallelement (12) nach Anspruch 1, wobei die lichtabsorbierende Schicht (141) aus einem Rußmaterial besteht.

3. Lichtblockierendes Metallelement (12) nach einem der Ansprüche 1 bis 2, wobei die Nanostrukturschicht (142) eine Verbindungsschicht (144) umfasst und die Verbindungsschicht (144) zwischen der lichtabsorbierenden Schicht (141) und der nano-gerippten konvexen Strukturschicht (145) angeordnet ist.

4. Lichtblockierendes Metallelement (12) nach einem der Ansprüche 1 bis 3, wobei eine Dicke der Verbindungsschicht (144) d ist und die folgende Bedingung erfüllt ist:

$$30 \text{ nm} \leq d \leq 500 \text{ nm.}$$

5. Lichtblockierendes Metallelement (12) nach einem der Ansprüche 1 bis 4, wobei eine Höhe jeder der Nanostruktureinheiten (143, 143a, 143b, 143c) h ist und die folgende Bedingung erfüllt ist:

$$90 \text{ nm} \leq h \leq 350 \text{ nm.}$$

6. Lichtblockierendes Metallelement (12) nach einem der Ansprüche 1 bis 5, wobei die Höhe jeder der Nanostruktureinheiten (143, 143a, 143b, 143c) h ist und die folgende Bedingung erfüllt ist:

$$90 \text{ nm} \leq h \leq 290 \text{ nm.}$$

7. Lichtblockierendes Metallelement (22a) nach einem der Ansprüche 1 bis 6, wobei die Spitzenendöffnungsstruktur mindestens eine Schwindungshohlraumstruktur (232a) aufweist und die mindestens eine Schwindungshohlraumstruktur (232a) näher an der Mittelachse (O) liegt als ein maximaler Außendurchmesser der Spitzenendöffnungsstruktur an der Mittelachse (O).

8. Lichtblockierendes Metallelement (12) nach einem der Ansprüche 1 bis 7, wobei der Winkel $\alpha$ ist und die folgende Bedingung erfüllt ist:

$$10 \text{ Grad} \leq \alpha \leq 150 \text{ Grad.}$$

9. Lichtblockierendes Metallelement (12) nach einem der Ansprüche 1 bis 8, wobei der Winkel $\alpha$ ist und die folgende Bedingung erfüllt ist:

$$20 \text{ Grad} \leq \alpha \leq 120 \text{ Grad.}$$

10. Lichtblockierendes Metallelement (22a) nach einem der Ansprüche 1 bis 9, ferner umfassend:

eine Aussparungsstruktur (250a), die auf mindestens einer von der ersten ringförmigen Oberfläche (220a) und der zweiten ringförmigen Oberfläche (230a) angeordnet ist, wobei die Aussparungsstruktur (250a) hin zur Außendurchmesseroberfläche (210a) ausgehöhlt ist und mindestens ein Abschnitt der Antireflexionsschicht (240a) auf der Aussparungsstruktur (250a) angeordnet ist.

11. Bildgebungslinsenanordnungsmodul (10), **dadurch gekennzeichnet, dass** es umfasst:

einen Bildgebungslinsensatz (11); und
mindestens eines von dem lichtblockierenden Metallelement (12) nach einem der Ansprüche 1 bis 10, wobei das mindestens eine lichtblockierende Metallelement (12) gegenüber dem Bildgebungslinsensatz (11) angeordnet ist.

12. Elektronische Vorrichtung (60), **dadurch gekennzeichnet, dass** sie umfasst:

das Bildgebungslinsenanordnungsmodul (10) nach Anspruch 11; und
einen Bildsensor, der auf einer Bildoberfläche des Bildgebungslinsenanordnungsmoduls (10) angeordnet ist.

13. Lichtblockierendes Metallelement (12), das eine Mittelachse (O) umgibt und **dadurch gekennzeichnet ist, dass** es umfasst:

eine Außendurchmesseroberfläche (110), die einen Außendurchmesser des lichtblockierenden Metallelements (12) definiert;
eine erste ringförmige Oberfläche (120), die entgegengesetzt zur Außendurchmesseroberfläche (110) angeordnet ist, und wobei die erste ringförmige Oberfläche (120) näher an der Mittelachse (O) liegt als die Außendurchmesseroberfläche (110) an der Mittelachse (O);
eine zweite ringförmige Oberfläche (130), die entgegengesetzt zur Außendurchmesseroberfläche (110) angeordnet ist, wobei die zweite ringförmige Oberfläche (130) näher an der Mittelachse (O) liegt als die Außendurchmesseroberfläche (110) an der Mittelachse (O) und wobei die erste ringförmige Oberfläche (120) mit der zweiten ringförmigen Oberfläche (130) verbunden ist, um eine Mindestöffnungsstruktur zu bilden; und
eine Antireflexionsschicht (140), die auf der ersten ringförmigen Oberfläche (120) und der zweiten ringförmigen Oberfläche (130) angeordnet ist, die Mindestöffnungsstruktur bedeckt und umfasst:

eine lichtabsorbierende Schicht (141); und
eine Nanostrukturschicht (142), die auf der lichtabsorbierenden Schicht (141) angeordnet ist;

wobei die Nanostrukturschicht (142) eine Vielzahl von Nanostruktureinheiten (143, 143a, 143b, 143c) umfasst, eine nano-gerippte konvexe Strukturschicht (145) über die Nanostruktureinheiten (143, 143a, 143b, 143c) gebildet ist und die Nanostruktureinheiten (143, 143a, 143b, 143c) eine Form mit breiter Unterseite und schmaler Spitze aufweisen, um einen äquivalenten Brechungsindex von der Unterseite zur Spitze der Nanostrukturschicht allmählich zu verringern, um ein reflektiertes Licht zu reduzieren,
wobei eine Länge der ersten ringförmigen Oberfläche (120) entlang der Mittelachse (O) L1 ist, eine Länge der zweiten ringförmigen Oberfläche (130) entlang der Mittelachse (O) L2 ist und die folgende Bedingung erfüllt ist:

$$0,01 \text{ mm} \leq L1+L2 \leq 3,00 \text{ mm}.$$

14. Lichtblockierendes Metallelement (12) nach Anspruch 13, wobei die lichtabsorbierende Schicht (141) aus einem Rußmaterial besteht.

15. Lichtblockierendes Metallelement (12) nach einem der Ansprüche 13 bis 14, wobei die Nanostrukturschicht (142) eine Verbindungsschicht (144) umfasst und die Verbindungsschicht (144) zwischen der lichtabsorbierenden Schicht (141) und der nano-gerippten konvexen Strukturschicht (145) angeordnet ist.

16. Lichtblockierendes Metallelement (12) nach einem der Ansprüche 13 bis 15, wobei eine Dicke der Verbindungsschicht (144) d ist und die folgende Bedingung erfüllt ist:

$$30 \text{ nm} \leq d \leq 500 \text{ nm}.$$

17. Lichtblockierendes Metallelement (12) nach einem der Ansprüche 13 bis 16, wobei eine Höhe jeder der Nanostruktureinheiten (143, 143a, 143b, 143c) h ist und die folgende Bedingung erfüllt ist:

$$90 \text{ nm} \leq h \leq 350 \text{ nm}.$$

18. Lichtblockierendes Metallelement (12) nach einem der Ansprüche 13 bis 17, wobei die Höhe jeder der Nanostruktureinheiten (143, 143a, 143b, 143c) h ist und die folgende Bedingung erfüllt ist:

$$90 \text{ nm} \leq h \leq 290 \text{ nm}.$$

19. Lichtblockierendes Metallelement (12) nach einem der Ansprüche 13 bis 18, wobei die Länge der ersten ringförmigen Oberfläche (120) entlang der Mittelachse (O) L1 ist, die Länge der zweiten ringförmigen Oberfläche (130) entlang der Mittelachse (O) L2 ist und die folgende Bedingung erfüllt ist:

$$0{,}03 \leq L1/L2 \leq 5.$$

20. Lichtblockierendes Metallelement (22a) nach einem der Ansprüche 13 bis 19, ferner umfassend:
eine Aussparungsstruktur (250a), die auf mindestens einer von der ersten ringförmigen Oberfläche (220a) und der zweiten ringförmigen Oberfläche (230a) angeordnet ist, wobei die Aussparungsstruktur (250a) hin zur Außendurchmesseroberfläche (210a) ausgehöhlt ist und mindestens ein Abschnitt der Antireflexionsschicht (240a) auf der Aussparungsstruktur (250a) angeordnet ist.

21. Lichtblockierendes Metallelement (22a) nach einem der Ansprüche 13 bis 20, wobei die Mindestöffnungsstruktur mindestens eine Schwindungshohlraumstruktur (232a) aufweist und die mindestens eine Schwindungshohlraumstruktur (232a) näher an der Mittelachse (O) liegt als ein maximaler Außendurchmesser der Mindestöffnungsstruktur an der Mittelachse (O).

22. Lichtblockierendes Metallelement (12), das eine Mittelachse (O) umgibt und **dadurch gekennzeichnet ist, dass** es umfasst:

eine Außendurchmesseroberfläche (110), die einen Außendurchmesser des lichtblockierenden Metallelements (12) definiert;
eine erste ringförmige Oberfläche (120), die entgegengesetzt zur Außendurchmesseroberfläche (110) angeordnet ist, und wobei die erste ringförmige Oberfläche (120) näher an der Mittelachse (O) liegt als die Außendurchmesseroberfläche (110) an der Mittelachse (O);
eine zweite ringförmige Oberfläche (130), die entgegengesetzt zur Außendurchmesseroberfläche (110) angeordnet ist, wobei die zweite ringförmige Oberfläche (130) näher an der Mittelachse (O) liegt als die Außendurchmesseroberfläche (110) an der Mittelachse (O) und wobei die erste ringförmige Oberfläche (120) mit der zweiten ringförmigen Oberfläche (130) verbunden ist; und
eine Antireflexionsschicht (140), die auf einer von der ersten ringförmigen Oberfläche (120) und der zweiten ringförmigen Oberfläche (130) angeordnet ist, und umfassend:

eine lichtabsorbierende Schicht (141); und
eine Nanostrukturschicht (142), die auf der lichtabsorbierenden Schicht (141) angeordnet ist;

wobei die Nanostrukturschicht (142) eine Vielzahl von Nanostruktureinheiten (143, 143a, 143b, 143c) umfasst, eine nano-gerippte konvexe Strukturschicht (145) über die Nanostruktureinheiten (143, 143a, 143b, 143c) gebildet ist und die Nanostruktureinheiten (143, 143a, 143b, 143c) eine Form mit breiter Unterseite und schmaler Spitze aufweisen, um einen äquivalenten Brechungsindex von der Unterseite zur Spitze der Nanostrukturschicht allmählich zu verringern, um ein reflektiertes Licht zu reduzieren, eine Höhe jeder der Nanostruktureinheiten (143, 143a, 143b, 143c) h ist und die folgende Bedingung erfüllt ist:

$$90 \text{ nm} \leq h \leq 350 \text{ nm}.$$

23. Lichtblockierendes Metallelement (12) nach Anspruch 22, wobei die Höhe jeder der Nanostruktureinheiten (143, 143a, 143b, 143c) h ist und die folgende Bedingung erfüllt ist:

$$90 \text{ nm} \leq h \leq 290 \text{ nm}.$$

24. Lichtblockierendes Metallelement (12) nach einem der Ansprüche 22 bis 23, wobei die lichtabsorbierende Schicht (141) aus einem Rußmaterial besteht.

**Revendications**

1. Élément de blocage de lumière métallique (12), entourant un axe central (O), et **caractérisé en ce qu'**il comprend :

   une surface de diamètre externe (110) définissant un diamètre externe de l'élément de blocage de lumière métallique (12) ;
   une première surface annulaire (120) disposée à l'opposé de la surface de diamètre externe (110), et la première surface annulaire (120) étant plus proche par rapport à l'axe central (O) que la surface de diamètre externe (110) par rapport à l'axe central (O) ;
   une deuxième surface annulaire (130) disposée à l'opposé de la surface de diamètre externe (110), la deuxième surface annulaire (130) étant plus proche par rapport à l'axe central (O) que la surface de diamètre externe (110) par rapport à l'axe central (O), et la première surface annulaire (120) étant reliée à la deuxième surface annulaire (130) pour former une structure d'ouverture minimale ; et
   une couche antireflet (140) disposée sur la première surface annulaire (120) et la deuxième surface annulaire (130), recouvrant la structure d'ouverture minimale, et comprenant :

      une couche d'absorption de lumière (141) ; et
      une couche de nanostructure (142) disposée sur la couche d'absorption de lumière (141) ;
      dans lequel la couche de nanostructure (142) comprend une pluralité d'unités de nanostructure (143, 143a, 143b, 143c), une couche de structure convexe nano-striée (145) est formée via les unités de nanostructure (143, 143a, 143b, 143c), et les unités de nanostructure (143, 143a, 143b, 143c) présentent une forme avec une partie inférieure large et une partie supérieure étroite de façon à réduire un indice de réfraction équivalent de manière graduelle à partir de la partie inférieure jusqu'à la partie supérieure de la couche de nanostructure pour réduire une lumière réfléchie,
      dans lequel la structure d'ouverture minimale est une structure d'ouverture d'extrémité de pointe, un angle est formé entre la première surface annulaire (120) et la deuxième surface annulaire (130), l'angle est $\alpha$, et la condition suivante est satisfaite :

$$0 \text{ degrés} < \alpha \leq 170 \text{ degrés}.$$

2. Élément de blocage de lumière métallique (12) selon la revendication 1, dans lequel la couche d'absorption de lumière (141) est constituée d'un matériau noir de carbone.

3. Élément de blocage de lumière métallique (12) selon l'une des revendications 1-2, dans lequel la couche de nanostructure (142) comprend une couche de liaison (144), et la couche de liaison (144) est disposée entre la couche d'absorption de lumière (141) et la couche de structure convexe nano-striée (145).

4. Élément de blocage de lumière métallique (12) selon l'une des revendications 1-3, dans lequel une épaisseur de la couche de liaison (144) est d, et la condition suivante est satisfaite :

$$30 \text{ nm} \leq d \leq 500 \text{ nm}.$$

5. Élément de blocage de lumière métallique (12) selon l'une des revendications 1-4, dans lequel une hauteur de chacune des unités de nanostructure (143, 143a, 143b, 143c) est h, et la condition suivante est satisfaite :

$$90 \text{ nm} \leq h \leq 350 \text{ nm}.$$

6. Élément de blocage de lumière métallique (12) selon l'une des revendications 1-5, dans lequel la hauteur de chacune des unités de nanostructure (143, 143a, 143b, 143c) est h, et la condition suivante est satisfaite :

$$90 \text{ nm} \leq h \leq 290 \text{ nm}.$$

7. Élément de blocage de lumière métallique (22a) selon l'une des revendications 1-6, dans lequel la structure d'ouverture d'extrémité de pointe présente au moins une structure de cavité de retrait (232a), et l'au moins une structure de cavité de retrait (232a) est plus proche par rapport à l'axe central (O) qu'un diamètre externe maximal de la structure d'ouverture d'extrémité de pointe par rapport à l'axe central (O).

8. Élément de blocage de lumière métallique (12) selon l'une des revendications 1-7, dans lequel l'angle est α, et la condition suivante est satisfaite :

$$10 \text{ degrés} \leq \alpha \leq 150 \text{ degrés}.$$

9. Élément de blocage de lumière métallique (12) selon l'une des revendications 1-8, dans lequel l'angle est α, et la condition suivante est satisfaite :

$$20 \text{ degrés} \leq \alpha \leq 120 \text{ degrés}.$$

10. Élément de blocage de lumière métallique (22a) selon l'une des revendications 1-9, comprenant en outre :
une structure d'évidement (250a) formée sur au moins l'une parmi la première surface annulaire (220a) et la deuxième surface annulaire (230a), la structure d'évidement (250a) s'enfonçant vers la surface de diamètre externe (210a), et au moins une partie de la couche antireflet (240a) disposée sur la structure d'évidement (250a).

11. Module ensemble objectif d'imagerie (10), **caractérisé en ce qu'**il comprend :

un ensemble objectif d'imagerie (11) ; et
au moins un élément de blocage de lumière métallique (12) selon l'une des revendications 1-10, dans lequel l'au moins un élément de blocage de lumière métallique (12) est disposé à l'opposé de l'ensemble objectif d'imagerie (11).

12. Dispositif électronique (60), **caractérisé en ce qu'**il comprend :

le module ensemble objectif d'imagerie (10) selon la revendication 11 ; et
un capteur d'image disposé sur une surface d'image du module ensemble objectif d'imagerie (10).

13. Élément de blocage de lumière métallique (12), entourant un axe central (O), et **caractérisé en ce qu'**il comprend :

une surface de diamètre externe (110) définissant un diamètre externe de l'élément de blocage de lumière métallique (12) ;
une première surface annulaire (120) disposée à l'opposé de la surface de diamètre externe (110), et la première surface annulaire (120) étant plus proche par rapport à l'axe central (O) que la surface de diamètre externe (110) par rapport à l'axe central (O) ;
une deuxième surface annulaire (130) disposée à l'opposé de la surface de diamètre externe (110), la deuxième surface annulaire (130) étant plus proche par rapport à l'axe central (O) que la surface de diamètre externe (110) par rapport à l'axe central (O), et la première surface annulaire (120) étant reliée à la deuxième surface annulaire (130) pour former une structure d'ouverture minimale ; et
une couche antireflet (140) disposée sur la première surface annulaire (120) et la deuxième surface annulaire (130), recouvrant la structure d'ouverture minimale, et comprenant :

une couche d'absorption de lumière (141) ; et
une couche de nanostructure (142) disposée sur la couche d'absorption de lumière (141) ;
dans lequel la couche de nanostructure (142) comprend une pluralité d'unités de nanostructure (143, 143a, 143b, 143c), une couche de structure convexe nano-striée (145) est formée via les unités de nanostructure (143, 143a, 143b, 143c), et les unités de nanostructure (143, 143a, 143b, 143c) présentent une forme avec une partie inférieure large et une partie supérieure étroite de façon à réduire un indice de réfraction équivalent de manière graduelle à partir de la partie inférieure jusqu'à la partie supérieure de la couche de nanostructure pour réduire une lumière réfléchie,

dans lequel une longueur de la première surface annulaire (120) le long de l'axe central (O) est L1, une longueur de la deuxième surface annulaire (130) le long de l'axe central (O) est L2, et la condition suivante est satisfaite :

$$0,01 \text{ mm} \leq L1 + L2 \leq 3,00 \text{ mm}.$$

**14.** Élément de blocage de lumière métallique (12) selon la revendication 13, dans lequel la couche d'absorption de lumière (141) est constituée d'un matériau noir de carbone.

**15.** Élément de blocage de lumière métallique (12) selon l'une des revendications 13-14, dans lequel la couche de nanostructure (142) comprend une couche de liaison (144), et la couche de liaison (144) est disposée entre la couche d'absorption de lumière (141) et la couche de structure convexe nano-striée (145).

**16.** Élément de blocage de lumière métallique (12) selon l'une des revendications 13-15, dans lequel une épaisseur de la couche de liaison (144) est d, et la condition suivante est satisfaite :

$$30 \text{ nm} \leq d \leq 500 \text{ nm}.$$

**17.** Élément de blocage de lumière métallique (12) selon l'une des revendications 13-16, dans lequel une hauteur de chacune des unités de nanostructure (143, 143a, 143b, 143c) est h, et la condition suivante est satisfaite :

$$90 \text{ nm} \leq h \leq 350 \text{ nm}.$$

**18.** Élément de blocage de lumière métallique (12) selon l'une des revendications 13-17, dans lequel la hauteur de chacune des unités de nanostructure (143, 143a, 143b, 143c) est h, et la condition suivante est satisfaite :

$$90 \text{ nm} \leq h \leq 290 \text{ nm}.$$

**19.** Élément de blocage de lumière métallique (12) selon l'une des revendications 13-18, dans lequel la longueur de la première surface annulaire (120) le long de l'axe central (O) est L1, la longueur de la deuxième surface annulaire (130) le long de l'axe central (O) est L2, et la condition suivante est satisfaite :

$$0,03 \leq L1/L2 \leq 5.$$

**20.** Élément de blocage de lumière métallique (22a) selon l'une des revendications 13-19, comprenant en outre : une structure d'évidement (250a) formée sur au moins l'une parmi la première surface annulaire (220a) et la deuxième surface annulaire (230a), la structure d'évidement (250a) s'enfonçant vers la surface de diamètre externe (210a), et au moins une partie de la couche antireflet (240a) disposée sur la structure d'évidement (250a).

**21.** Élément de blocage de lumière métallique (22a) selon l'une des revendications 13-20, dans lequel la structure d'ouverture minimale présente au moins une structure de cavité de retrait (232a), et l'au moins une structure de cavité de retrait (232a) est plus proche par rapport à l'axe central (O) qu'un diamètre externe maximal de la structure d'ouverture minimale par rapport à l'axe central (O).

**22.** Élément de blocage de lumière métallique (12), entourant un axe central (O), et **caractérisé en ce qu'**il comprend :

une surface de diamètre externe (110) définissant un diamètre externe de l'élément de blocage de lumière métallique (12) ;
une première surface annulaire (120) disposée à l'opposé de la surface de diamètre externe (110), et la première surface annulaire (120) étant plus proche par rapport à l'axe central (O) que la surface de diamètre externe (110) par rapport à l'axe central (O) ;
une deuxième surface annulaire (130) disposée à l'opposé de la surface de diamètre externe (110), la deuxième surface annulaire (130) étant plus proche par rapport à l'axe central (O) que la surface de diamètre externe (110) par rapport à l'axe central (O), et la première surface annulaire (120) étant reliée à la deuxième surface annulaire (130) ; et

une couche antireflet (140) disposée sur au moins l'une parmi la première surface annulaire (120) et la deuxième surface annulaire (130), et comprenant :

une couche d'absorption de lumière (141) ; et
une couche de nanostructure (142) disposée sur la couche d'absorption de lumière (141) ;
dans lequel la couche de nanostructure (142) comprend une pluralité d'unités de nanostructure (143, 143a, 143b, 143c), une couche de structure convexe nano-striée (145) est formée via les unités de nanostructure (143, 143a, 143b, 143c), et les unités de nanostructure (143, 143a, 143b, 143c) présentent une forme avec une partie inférieure large et une partie supérieure étroite de façon à réduire un indice de réfraction équivalent de manière graduelle à partir de la partie inférieure jusqu'à la partie supérieure de la couche de nanostructure pour réduire une lumière réfléchie,
une hauteur de chacune des unités de nanostructure (143, 143a, 143b, 143c) est h, et la condition suivante est satisfaite :

$$90 \text{ nm} \leq h \leq 350 \text{ nm.}$$

23. Élément de blocage de lumière métallique (12) selon la revendication 22, dans lequel la hauteur de chacune des unités de nanostructure (143, 143a, 143b, 143c) est h, et la condition suivante est satisfaite :

$$90 \text{ nm} \leq h \leq 290 \text{ nm.}$$

24. Élément de blocage de lumière métallique (12) selon l'une des revendications 22-23, dans lequel la couche d'absorption de lumière (141) est constituée d'un matériau noir de carbone.

10

13

140

12

11

Fig. 1A

Fig. 1B

10

12

13

O

11

Fig. 1C

Fig. 1D

Fig. 1E

Fig. 1F

Fig. 1G

Fig. 2A

22a

210a

243a
230a
241a
220a

α

h

O

220a

L2
L1
231a
240a
230a

Fig. 2B

Fig. 2C

22a

232a

241a

Fig. 2D

Fig. 2E

Fig. 2F

Fig. 3

Fig. 4A

Fig. 4B

Fig. 5

EP 4 266 091 B1

EP 4 266 091 B1

60

61

Fig. 6A

Fig. 6B

EP 4 266 091 B1

Fig. 6C

6E

Fig. 6D

Fig. 6E

Fig. 7

EP 4 266 091 B1

80

81

θ

Fig. 8A

EP 4 266 091 B1

48

Fig. 8B

Fig. 8C

Fig. 9(prior art)

**EP 4 266 091 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021165136 A1
- US 2020174167 A1
- US 2018335607 A1
- US 2020088969 A1